# EUROPÄISCHE PATENTSCHRIFT

(11) **EP 4 210 624 B1**
(45) Veröffentlichungstag und Bekanntmachung des Hinweises auf die Patenterteilung: **17.04.2024**
(21) Anmeldenummer: 21777260.7
(22) Anmeldetag: 10.09.2021
(51) Int. Cl.: A61C 5/64

(54) **DREIKAMMER-KAPSEL-APPLIKATIONSSYSTEM FÜR MEDIZINISCHE ANWENDUNGEN**
THREE-CHAMBER-CAPSULE APPLICATION SYSTEM FOR MEDICAL APPLICATIONS
SYSTÈME D'APPLICATION DE CAPSULE À TROIS CHAMBRES POUR APPLICATIONS MÉDICALES

(30) Priorität: 10.09.2020 DE 102020123589
(43) Veröffentlichungstag der Anmeldung: 19.07.2023
(73) Patentinhaber: Universität Rostock, 18055 Rostock (DE)
(72) Erfinder: OSCHATZ, Stefan Thomas, 18057 Rostock (DE); SIEWERT, Stefan, 18055 Rostock (DE); BELLÉ, Paul Hermann, 18055 Rostock (DE); BEHNKE, Richard, 18059 Papendorf (DE); BURMEISTER, Ulrike, 18057 Rostock (DE); SCHMITZ, Klaus-Peter, 18119 Rostock (DE); LANG, Hermann, 18057 Rostock (DE); GRABOW, Niels, 18055 Rostock (DE)
(74) Vertreter: Gulde & Partner
(86) Internationale Anmeldenummer: PCT/EP2021/074893
(87) Internationale Veröffentlichungsnummer: WO 2022/053594

(56) Entgegenhaltungen:
- US-A- 3 760 503
- US-A- 4 159 570
- US-A1- 2007 164 047

## Beschreibung

Die vorliegende Erfindung betrifft ein System, insbesondere ein Dreikammer-Kapsel-Applikationssystem, zum Lagern, Mischen und Ausbringen von Dreikomponentenmaterialien, insbesondere Dreikomponentenmaterialien für medizinische, zahnmedizinische und implantattechologische Anwendungen, wobei die Einzelkomponenten getrennt gelagert werden und erst unmittelbar vor dem Ausbringen miteinander vermischt werden. Die vorliegende Erfindung betrifft ferner eine Dreikammer-Kapsel, die mit dem erfindungsgemäßen Dreikammer-Kapsel-Applikationssystem hergestellt worden ist. Weiterhin betrifft die Erfindung ein Verfahren zur Herstellung einer Dreikammer-Kapsel dem erfindungsgemäßen Dreikammer-Kapsel-Applikationssystem sowie ein Verfahren zur Herstellung (Ausbringung) einer medizinisch wirksamen Mischsubstanz aus drei Komponenten mittels der erfindungsgemäßen Dreikammer-Kapsel.

### Hintergrund

In situ reagierende Systeme sind ein hochaktuelles Thema in der Medizinprodukteforschung. Besondere Herausforderung ist dabei die Lagerstabilität mehrerer reaktiver Komponenten bei gleichzeitig einfacher Herstellbarkeit (Prozessierbarkeit) einer Mischsubstanz aus den einzeln gelagerten Komponenten in wenigen Arbeitsschritten. Der Begriff "Mischsubstanz" soll dabei allgemein sowohl Substanzen umfassen, die aus einem einfachen, nicht-reaktiven Durchmischen der Komponenten entstehen (etwa Emulsionen), als auch Substanzen, die durch eine chemische Reaktion mindestens zweier der einzeln gelagerten Komponenten entstehen.

Gegenwärtig lassen sich drei Gruppen von Mischsystemen identifizieren: Spritzensysteme, Kapselmischsysteme und Handmischvarianten. Spritzensysteme beinhalten mindestens zwei flüssige Komponenten, welche in einzelnen, miteinander verbundenen Kartuschen getrennt gelagert werden (siehe u. a. 3M Espe, Dentsply Sirona, Sulzer Mixpac). Eine weitere Möglichkeit stellen Kapselapplikationssysteme (kurz: Kapselsysteme) dar, wobei dabei sowohl zwei oder mehr flüssige Substanzen, als auch zwei oder mehr flüssige und feste Stoffe (z. B. in Pulverform) gelagert und vermischt werden können, wobei im letzteren Falle aber typischerweise zumindest eine flüssige / viskose Komponente beteiligt ist.

Kapselsysteme weisen mehrere getrennten Kammern zur Lagerung, Durchmischung und Applikation der verschiedenen Ausgangssubstanzen (Komponenten) auf. Die Anzahl der in einem Kapselapplikationssystem unterteilten Räume oder Kammern entspricht dabei der Anzahl der zu vermengenden Substanzen.

Die Anwendung von Kapselsystemen ist u. a. in der Zahnerhaltung etabliert. Ein innovatives Beispiel aus der Forschung ist beispielsweise der Einsatz probiotischer Bakterien zur Verdrängung pathogener Keime in der Parodontitis-Therapie [T. Eickner, M. Scholz, K. Ekat, B. Wuttke, A. Brietzke, N. Grabow, K.-P. Schmitz, H. Lang: Depotsystem zur kontrollierten Freisetzung von Probiotika für dentale Anwendungen, 2018, DE10 2018 126 394 A1]. Dieses System bedingt eine getrennte Lagerung der Einzelbestandteile bis zur Durchmischung kurz vor der Applikation, um eine Langzeitlagerung gewährleisten zu können. Praktischerweise erfolgt die Lagerung in einem Drei-Kammer-Kapselsystem. Ein weiteres Beispiel ist die Lagerung empfindlicher Pharmaka, welche in Medium oder durch Zugabe von Aktivatoren instabil werden und somit nicht lagerfähig sind.

In der internationalen Patentanmeldung WO 2007/112981 A1 wird beispielsweise ein Kapsel-Applikationssystem zur Lagerung und Vermischung von drei Komponenten beschrieben. Allerdings erweist sich dieses System in der Praxis durch den Einsatz eines Applizierpinsels als in seinen Applikationsmöglichkeiten stark begrenzt.

Es besteht also Bedarf an einem Mehrkapselsystem, und insbesondere an einem Dreikapselsystem, bei dem es möglich ist, die einzelnen Kammern durch sehr einfache und unkomplizierte Handgriffe zu öffnen. Weiterhin muss das Kapselsystem in der Lage sein, ein ungewolltes Ein- oder Austreten sowie ein unbeabsichtigtes Vermischen und/oder Reagieren der einzelnen, in den Kammern getrennt gelagerten Substanzen zu vermeiden sowie eine Verdunstung und/oder eine Kontamination dieser Substanzen zu verhindern. Zudem soll die Herstellung eines solchen Mehrkapselsystems einfach sein und möglichst mit den am Markt erhältlichen Mischautomaten kompatibel sein, sodass diese Mischmethoden verwendet werden können. Vorteil dieser Automaten ist eine im Vergleich zu Mischextrudern wesentlich reproduzierbare und homogenere Durchmischung. Zudem soll das Kapselsystem eine sequenzielle Durchmischung / Reaktion der Substanzen erlauben, d. h., eine Durchmischung, bei der zunächst zwei der getrennt gelagerten Substanzen durchmischt werden (und dabei gegebenenfalls auch reagieren) und anschließend, das Mischprodukt aus der diesen beiden Substanzen mit der verbliebenen dritten Substanz vermischt wird (und dabei gegebenenfalls wiederum eine Reaktion stattfinden kann).

In Druckschrift US 4,159,570 A wird eine Einweg-Mischspritze beschrieben, die insbesondere für den zahnärztlichen Gebrauch geeignet ist. Sie besteht aus einem Zylinder mit gleichmäßigem Innendurchmesser, der durch eine feste Membran in eine obere und eine untere Kammer zur Aufnahme der ersten bzw. zweiten Komponente einer zu bildenden Mischung unterteilt ist und in einer Düse mit einer kleinen Öffnung endet. Ein abnehmbarer Verschluss dichtet das gegenüberliegende Zylinderende ab. Das Einführen eines Mischwerkzeugs durch die Membrane ermöglicht ein schnelles Mischen der Bestandteile, woraufhin ein geeigneter Kolben vorgesehen ist, um den Inhalt durch die Öffnung auszustoßen.

Ferner offenbart Druckschrift US 3,760,503 A eine Einweg-Mischspritze, die ebenfalls speziell für den zahnärztlichen Gebrauch geeignet ist. Sie umfasst einen Zylinder zur Aufnahme einer Komponente einer zu bildenden Mischung und endet in einer flexiblen Düse mit einer kleinen Öffnung. Das gegenüberliegende Ende des Zylinders ist offen und kann eine versiegelte, herausnehmbare Einsatzpackung aufnehmen, die aus durchstechbarem Material besteht und eine zweite Komponente der zu bildenden Mischung enthält. Das Einführen eines Mischwerkzeugs durch den Einsatz ermöglicht ein schnelles Mischen der Bestandteile, woraufhin ein geeigneter Kolben vorgesehen ist, um den Inhalt durch die Öffnung auszustoßen.

Zumindest einige der oben genannten Aufgaben werden durch den in den unabhängigen Patentansprüchen definierten Gegenstand gelöst. Vorteilhafte Weiterbildungen und Ausführungsformen des erfindungsgemäßen Gegenstandes ergeben sich aus den abhängigen Patentansprüchen.

### Offenbarung der Erfindung

In Ausführungsformen der vorliegenden Erfindung werden die im Zusammenhang mit dem Stand der Technik beschriebenen Probleme zumindest teilweise gelöst. Gemäß einem Aspekt der vorliegenden Erfindung wird ein Dreikammer-Kapsel-Applikationssystem zur Lagerung, Mischung und Ausbringung reaktiver Substanzen bereitgestellt. Das Dreikammer-Kapsel-Applikationssystem weist dabei insbesondere auf: einen vorderen Kapselteil, der als Hohlkörper mit einem geschlossenen oder im Wesentlichen geschlossenen vorderen Ende und einem offenen hinteren Ende ausgestaltet ist; einen hinteren Kapselteil, der als Hohlkörper mit einem offenen vorderen Ende und einem offenen hinteren Ende ausgestaltet ist; einen mittleren Kapselteil, der als Hohlkörper mit einem vorderen Ende und einem hinteren Ende ausgestaltet ist; und einen Kolben. Ferner weist das Dreikammer-Kapsel-Applikationssystem auf: eine erste Membrane, die im Wesentlichen quer zur Längsrichtung des hinteren Kapselteils im hinteren Kapselteil an einer vorgesehenen Position fixierbar ist; und eine zweite Membrane, die im Wesentlichen quer zur Längsrichtung des vorderen Kapselteils im vorderen Kapselteil an einer vorgesehenen Position fixierbar ist.

Vorstehend sowie im weiteren Verlauf wurden die Begriffe "hinteres Kapselteil", "mittleres Kapselteil", "vorderes Kapselteil" sowie "hinteres Ende", "vorderes Ende" und dergleichen im Hinblick auf eine leichte Verständlichkeit der Beschreibung gewählt. Diese Bezeichnungen dienen jedoch einzig der Unterscheidung der genannten Merkmale und Komponenten und beschränken den Gegenstand nicht in seiner räumlichen Ausrichtung. Anstelle von einem "hinteren Kapselteil", "mittleren Kapselteil" und "vorderen Kapselteil" ließe sich also ebenso von einem "ersten Kapselteil" (oder auch "proximalen Kapselteil"), "zweiten Kapselteil" beziehungsweise "dritten Kapselteil" (oder auch "distalen Kapselteil") sprechen, und die Begriffe "hinteres Ende" und "vorderes Ende" können auch durch die Begriffe "erstes Ende" beziehungsweise "zweites Ende" (oder auch "proximalen Ende" beziehungsweise "distales Ende") ersetzt werden. Ferner wird das erfindungsgemäße "Dreikammer-Kapsel-Applikationssystem" auch abkürzend als "erfindungsgemäßes Kapselsystem" bezeichnet, oder an Stellen, an denen klar ist, dass das erfindungsgemäße Kapselsystem gemeint ist, auch einfach als "Kapselsystem" oder "System".

Das vorgestellte Dreikammer-Kapsel-Applikationssystem ermöglicht eine Lagerung von reaktiven Mehrkomponentensystemen bestehend aus drei Einzelkomponenten in einem Kapselsystem mit mehreren Kammern, welche sich sequenziell Öffnen lassen. Gleichzeitig werden dadurch Mischkammern gebildet, in welchen sich die Substanzen vermischen lassen. Das System ist zudem mit üblichen Kapselmischgeräten kompatibel. Das erfindungsgemäße Kapselsystem stellt insbesondere drei abgegrenzte Hohlräume (Kammern) zur Lagerung und Mischung von Stoffen zur Verfügung, die dicht abschließen, um ungewolltes Ein- oder Austreten sowie ein Vermischen der gelagerten Substanzen zu vermeiden. Das Kapselsystem kann leicht mit mehreren Substanzen befüllt werden; da es Einzelteile zur Verfügung stellt, welche sich in einfacher Weise ineinander stecken und verschließen lassen.

Das erfindungsgemäße Kapselsystem eignet sich insbesondere für den Einsatz in der Zahnmedizin (speziell in der Parodontologie und Implantologie) und stellt ein Wirkstoffdepot zur Verfügung, das sich auch für die Lagerung von Biomaterialen eignet.

Wenn das Kapselsystem - wie unten eingehender beschrieben - zusammengesetzt ist, ergibt sich, in Längsrichtung gesehen, zwischen dem Kolben und der ersten Membrane auf diese Weise eine erste (hintere) Kammer des Kapselsystems, zwischen der ersten Membrane und der zweiten Membrane ergibt sich eine zweite (mittlere) Kammer des Kapselsystems, und zwischen der zweiten Membrane und dem im Wesentlichen geschlossenen vorderen Ende des vorderen Kapselteils ergibt sich schließlich eine dritte (vordere) Kammer des Kapselsystems.

In einer Ausführungsform des erfindungsgemäßen Dreikammer-Kapsel-Applikationssystems ist dabei ist der mittlere Kapselteil mit seinem vorderen Ende in das hintere Ende des vorderen Kapselteils bis zu der Position einschiebbar, an welcher die zweite Membrane fixierbar ist, und mit seinem hinteren Ende in des vordere Ende des hinteren Kapselteils bis zu der Position einschiebbar, an welcher die erste Membrane fixierbar ist. Das hintere Ende des vorderen Kapselteils ist mit dem vorderen Ende des hinteren Kapselteils verbindbar, während der mittlere Kapselteil mit seinem vorderen Ende in das hintere Ende des vorderen Kapselteils eingeschoben und mit seinem hinteren Ende in den vordere Ende des hinteren Kapselteils eingeschoben ist. Dabei ist der Kolben in das hintere Ende des hinteren Kapselteils einschiebbar und, wenn das mittlere Kapselteil mit seinem hinteren Ende in das vordere Ende des hinteren Kapselteils eingeschoben ist, durch das hintere Kapselteil hindurch in das mittlere Kapselteil einschiebbar.

In einer Ausführungsform des erfindungsgemäßen Dreikammer-Kapsel-Applikationssystems weist der vordere Kapselteil eine im Wesentlichen rotationssymmetrische Innenoberfläche auf. Zudem weist der hintere Kapselteil eine im Wesentlichen rotationssymmetrische Innoberfläche auf. Ferner ist der Hohlkörper des mittleren Kapselteils im Wesentlichen ein beidseitig offener Hohlzylinder. Auch ist der Kolben im Wesentlichen rotationssymmetrisch ausgestaltet.

In einer Ausführungsform des erfindungsgemäßen Dreikammer-Kapsel-Applikationssystems weist der Kolben eine radial zu seiner Symmetrieachse ausragende Nase auf. "Radial" oder "in radialer Richtung" soll hier in Bezug auf die Symmetrieachse des rotationssymmetrischen Kolbens bedeuten, dass die Nase in einer zur Symmetrieachse orthogonalen Richtung von der Symmetrieachse weg weist.

In einer weitergehenden Ausführungsform des Dreikammer-Kapsel-Applikationssystems weist die Innenoberfläche des hinteren Kapselteils eine erste Führungsnut zum Führen der Nase auf. Dabei ist die erste Führungsnut so ausgestaltet, dass beim Bewegen des Kolbens im hinteren Kapselteil eine durchgängige Schiebbewegung des Kolbens vom hinteren Ende des hinteren Kapselteils in Richtung des vorderen Endes des hinteren Kapselteils ohne eine Drehbewegung des Kolbens um dessen Längsachse nur bis zu einem ersten Stopppunkt möglich ist, wobei der erste Stopppunkt so platziert ist, dass der bis zum ersten Stopppunkt geschobene Kolben die erste Membrane nicht berührt, wenn die erste Membrane im hinteren Kapselteil fixiert ist.

Damit wird verhindert, dass der Kolben unbeabsichtigt die erste Membrane beim zusammengesetzten Kapselsystem durchdringt.

In einer Ausführungsform des Dreikammer-Kapsel-Applikationssystems ist die erste Führungsnut ferner so ausgestaltet, dass aus der Position des ersten Stopppunkts heraus eine weitere Schiebbewegung des Kolbens in Richtung des vorderen Endes des hinteren Kapselteils erst nach einer Drehbewegung des Kolbens oder einer kombinierten Dreh- und Schiebbewegung des Kolbens in Richtung des hinteren Endes des hinteren Kapselteils möglich wird.

In einer Ausführungsform des Dreikammer-Kapsel-Applikationssystems ist die erste Führungsnut annähernd Z-förmig ausgestaltet und weist drei aneinandergereihte Pfade auf. Dabei sind ein erster Pfad und ein dritter Pfad der ersten Führungsnut im Wesentlichen in Längsrichtung des hinteren Kapselteils ausgerichtet. Der erste Pfad der ersten Führungsnut endet, vom hinteren Ende des hinteren Kapselteils in Richtung des vorderen Endes des hinteren Kapselteils gesehen, am ersten Stopppunkt. Der dritte Pfad der ersten Führungsnut beginnt, vom hinteren Ende des hinteren Kapselteils in Richtung des vorderen Endes des hinteren Kapselteils gesehen, an einem ersten Weiterführungspunkt. Dabei ist der erste Weiterführungspunkt vom ersten Stopppunkt verschieden und radial um einen Winkel um die Längsachse des hinteren Kapselteils gegenüber dem ersten Stopppunkt versetzt. Ein zweiter Pfad der ersten Führungsnut verläuft zwischen dem ersten Stopppunkt und dem ersten Weiterführungspunkt.

Vorzugsweise ist dabei der erste Weiterführungspunkt näher am hinteren Ende des hinteren Kapselteils positioniert als der erste Stopppunkt. Diese vorzugsweise Ausführungsform bewirkt, dass der Kolben im hinteren Kapselteil während der Drehbewegung zugleich auch ein Stück weit zurück (nach hinten) geführt werden muss, um anschließend dann eine weitere Vorwärtsbewegung zu ermöglichen.

In einer Ausführungsform des Dreikammer-Kapsel-Applikationssystems weist die Innenoberfläche des mittleren Kapselteils eine zweite Führungsnut zum Führen der Nase auf. Dabei ist die zweite Führungsnut so ausgestaltet, dass beim Bewegen des Kolbens im mittleren Kapselteil eine durchgängige Schiebbewegung des Kolbens vom hinteren Ende des mittleren Kapselteils in Richtung des vorderen Endes des mittleren Kapselteils ohne eine Drehbewegung des Kolbens um dessen Längsachse nur bis zu einem zweiten Stopppunkt möglich ist, wobei der zweite Stopppunkt so platziert ist, dass der bis zum zweiten Stopppunkt geschobene Kolben die zweite Membrane nicht berührt, wenn das mittlere Kapselteil in das vordere Kapselteil eingeschoben ist und die zweite Membrane im vorderen Kapselteil fixiert ist.

Damit wird verhindert, dass der Kolben unbeabsichtigt die zweite Membrane beim zusammengesetzten Kapselsystem durchdringt.

In einer Ausführungsform des Dreikammer-Kapsel-Applikationssystems ist die zweite Führungsnut ferner so ausgestaltet, dass aus der Position des zweiten Stopppunkts heraus eine weitere Schiebbewegung des Kolbens in Richtung des vorderen Endes des mittleren Kapselteils erst nach einer Drehbewegung des Kolbens oder einer kombinierten Dreh- und Schiebbewegung des Kolbens in Richtung des hinteren Endes des mittleren Kapselteils möglich wird.

In einer Ausführungsform des Dreikammer-Kapsel-Applikationssystems ist die zweite Führungsnut annähernd Z-förmig ausgestaltet und weist drei aneinandergereihte Pfade auf. Dabei sind ein erster Pfad und ein dritter Pfad der zweiten Führungsnut im Wesentlichen in Längsrichtung des mittleren Kapselteils ausgerichtet. Der erste Pfad der zweiten Führungsnut verläuft zwischen dem hinteren Ende des mittleren Kapselteils und dem zweiten Stopppunkt. Der dritte Pfad der zweiten Führungsnut verläuft zwischen dem vorderen Ende des mittleren Kapselteils und einem zweiten Weiterführungspunkt. Dabei ist der zweite Weiterführungspunkt vom zweiten Stopppunkt verschieden und radial um einen Winkel um die Längsachse des mittleren Kapselteils gegenüber dem zweiten Stopppunkt versetzt. Ein zweiter Pfad der zweiten Führungsnut verläuft zwischen dem zweiten Stopppunkt und dem zweiten Weiterführungspunkt.

Vorzugsweise ist der zweite Weiterführungspunkt näher am hinteren Ende des mittleren Kapselteils positioniert als der zweite Stopppunkt. Diese vorzugsweise Ausführungsform bewirkt, dass der Kolben im mittleren Kapselteil während der Drehbewegung zugleich auch ein Stück weit zurück (nach hinten) geführt werden muss, um anschließend dann eine weitere Vorwärtsbewegung zu ermöglichen.

In einer Ausführungsform des Dreikammer-Kapsel-Applikationssystems ist das hintere Ende des vorderen Kapselteils mit dem vorderen Ende des hinteren Kapselteils verdrehgesichtert verbindbar. Beispielweise kann dabei das hintere Ende des vorderen Kapselteils mit dem vorderen Ende des hinteren Kapselteils durch einen Bajonett-Verschluss verbindbar sein.

In einer Ausführungsform des Dreikammer-Kapsel-Applikationssystem ist der mittlere Kapselteil mit seinem vorderen Ende verdrehgesichtert in den vorderen Kapselteil einschiebbar.

In einer Ausführungsform des Dreikammer-Kapsel-Applikationssystems ist der mittlere Kapselteil mit seinem hinteren Ende verdrehgesichtert in den hinteren Kapselteil einschiebbar.

In einer Ausführungsform des Dreikammer-Kapsel-Applikationssystems schließt sich die erste Führungsnut des hinteren Kapselteils formschlüssig an die zweite Führungsnut des mittleren Kapselteils an, wenn das mittlere Kapselteil mit seinem hinteren Ende in des vordere Ende des hinteren Kapselteils bis zu der Position eingeschoben ist, an welcher die erste Membrane fixierbar ist.

Auf diese Weise kann die in radialer Richtung ausragende Nase des Kolbens während einer Schiebbewegung des Kolbens nach vorne von der ersten Führungsnut in die zweite Führungsnut geführt oder übergeleitet werden.

In einer Ausführungsform des Dreikammer-Kapsel-Applikationssystems weist die Innenoberfläche des vorderen Kapselteils eine dritte Führungsnut zum Führen der Nase auf.

Auf diese Weise kann die in radialer Richtung ausragende Nase des Kolbens während einer Schiebbewegung des Kolbens nach vorne von der zweiten Führungsnut in die dritte Führungsnut geführt oder übergeleitet werden.

Vorzugsweise schließt sich die zweite Führungsnut des mittleren Kapselteils formschlüssig an die dritte Führungsnut des vorderen Kapselteils an, wenn das mittlere Kapselteil mit seinem vorderen Ende in des hintere Ende des vorderen Kapselteils bis zu der Position eingeschoben ist, an welcher die zweite Membrane fixierbar ist.

In einer Ausführungsform des Dreikammer-Kapsel-Applikationssystems weist das vordere Ende des vorderen Kapselteils eine Mündung oder einen Auslass zum Durchlassen einer flüssigen oder viskosen Substanz durch das vordere Ende des vorderen Kapselteils auf. Dabei kann die Mündung oder der Auslass beispielsweise als männlicher Luer-Konus oder als Schwenkdüsenstück ausgestaltet sein. Ist die Mündung oder der Auslass am vorderen Ende des vorderen Kapselteils als männlicher Luer-Konus ausgestaltet, so kann er beispielwiese für eine Luer-Slip Verbindung zur Aufnahme einer Kanüle verwendet werden.

In einer Ausführungsform des Dreikammer-Kapsel-Applikationssystems weist der Kolben einen Dorn zum Durchstoßen der ersten Membrane und/oder zweiten Membrane auf.

In einer Ausführungsform des Dreikammer-Kapsel-Applikationssystems weist die Innenoberfläche des vorderen Kapselteils einen vorderen Bereich und einen hinteren Bereich auf. Dabei ist der vordere Bereich der Innenoberfläche des vorderen Kapselteils im Wesentlichen als halboffener Zylinder mit einem ersten Radius ausgestaltet, dessen geschlossenes Ende dem vorderen Ende des vorderen Kapselteils entspricht. Zudem ist dabei der hintere Bereich der Innenoberfläche des vorderen Kapselteils im Wesentlichen als beidseitig offener Zylinder mit einem zweiten Radius ausgestaltet, wobei der zweite Radius größer ist als der erste Radius.

In einer Ausführungsform des Dreikammer-Kapsel-Applikationssystems weist die Innenoberfläche des hinteren Kapselteils einen vorderen Bereich und einen hinteren Bereich auf. Dabei ist der vordere Bereich der Innenoberfläche des hinteren Kapselteils im Wesentlichen als beidseitig offener Zylinder ausgestaltet, der den zweiten Radius aufweist. Ferner ist der hintere Bereich der Innenoberfläche des hinteren Kapselteils im Wesentlichen als beidseitig offener Zylinder ausgestaltet, der den ersten Radius aufweist.

In einer Ausführungsform des Dreikammer-Kapsel-Applikationssystems entspricht die Innenoberfläche des mittleren Kapselteils im Wesentlichen einem Zylinder mit dem ersten Radius, und die Außenoberfläche des mittleren Kapselteils entspricht im Wesentlichen einem Zylinder mit dem zweiten Radius.

Auf diese Weise lässt sich das mittlere Kapselteil formschlüssig sowohl in das hintere Ende des vorderen Kapselteils einschieben als auch formschlüssig in das vordere Ende des hinteren Kapselteils einschieben.

In einer Ausführungsform des Dreikammer-Kapsel-Applikationssystems weist der rotationssymmetrische Kolben einen Radius auf, der dem ersten Radius entspricht.

In einer Ausführungsform des Dreikammer-Kapsel-Applikationssystems entspricht die Länge des mittleren Kapselteils dem Abstand zwischen der Position im hinteren Kapselteil, die zum Fixieren der ersten Membrane vorgesehen ist, und der Position im vorderen Kapselteil, die zum Fixieren der zweiten Membrane vorgesehen ist, wenn das hintere Ende des vorderen Kapselteils mit dem vorderen Ende des hinteren Kapselteils verbunden ist.

In einer Ausführungsform des Dreikammer-Kapsel-Applikationssystems ist zur Fixierung der ersten Membrane im hinteren Kapselteil ein erster O-Ring und/oder zur Fixierung der zweiten Membrane im vorderen Kapselteil ein zweiter O-Ring vorgesehen.

In einer Ausführungsform des Dreikammer-Kapsel-Applikationssystems weist die Innenoberfläche des hinteren Kapselteils an einer ersten Position entlang der Längsachse des hinteren Kapselteils eine erste kreisförmige Nut zur Aufnahme des ersten O-Rings auf.

In einer Ausführungsform des Dreikammer-Kapsel-Applikationssystems weist die Innenoberfläche des vorderen Kapselteils an einer zweiten Position entlang der Längsachse des vorderen Kapselteils eine zweite kreisförmige Nut zur Aufnahme des zweiten O-Rings auf.

In einer Ausführungsform des Dreikammer-Kapsel-Applikationssystems ist der mittlere Kapselteil mit seinem vorderen Ende in das hintere Ende des vorderen Kapselteils bis zu der Position eingeschoben, die für die Fixierung der zweiten Membrane vorgesehen ist. Zudem ist der mittlere Kapselteil mit seinem hinteren Ende in des vordere Ende des hinteren Kapselteils bis zu der Position eingeschoben, die für die Fixierung der ersten Membrane vorgesehen ist. Ferner ist das hintere Ende des vorderen Kapselteils mit dem vorderen Ende des hinteren Kapselteils verbunden. Der Kolben ist in das hintere Ende des hinteren Kapselteils eingeschoben. Ferner befindet sich das dem vorderen Ende des hinteren Kapselteils zugewandte Ende des Kolbens zwischen dem ersten Stopppunkt und dem hinteren Ende des hinteren Kapselteils.

In einer Ausführungsform des Dreikammer-Kapsel-Applikationssystems ist die erste Membrane im hinteren Kapselteil fixiert und die die zweite Membrane im vorderen Kapselteil fixiert. Ferner befindet sich eine erste medizinisch wirksame Substanz im Bereich zwischen dem Kolben und der ersten Membrane. Zudem befindet sich eine zweite medizinisch wirksame Substanz im Bereich zwischen der ersten Membrane und der zweiten Membrane. Schließlich befindet sich eine dritte medizinisch wirksame Substanz im Bereich zwischen der zweiten Membrane und dem im Wesentlichen geschlossenen vorderen Ende des vorderen Kapselteils.

Ein weiterer Aspekt der vorliegenden Erfindung bezieht sich auf ein Verfahren zum Herstellen einer Dreikammer-Kapsel nach Anspruch 13 mit einer Ausführungsform nach einem der Ansprüche 1-12 des erfindungsgemäßen Dreikammer-Kapsel-Applikationssystems. Dabei weist das Verfahren die folgenden Schritte auf:
a) Einschieben des Kolbens in das hintere Ende des hinteren Kapselteils, so dass sich das dem vorderen Ende des hinteren Kapselteils zugewandte Ende des Kolbens zwischen dem ersten Stopppunkt und dem hinteren Ende (36) des hinteren Kapselteils befindet;
b) Befüllen des hinteren Kapselteils mit einer ersten medizinisch wirksamen Substanz im Bereich zwischen dem Kolben und der Position, die zum Fixieren der ersten Membrane vorgesehen ist;
c) Fixieren der ersten Membrane an der dazu vorgesehenen Position im hinteren Kapselteil;
d) Einschieben des mittleren Kapselteils mit seinem hinteren Ende in des vordere Ende des hinteren Kapselteils bis zu der Position der ersten Membrane;
e) Befüllen des mittleren Kapselteils mit einer zweiten medizinisch wirksamen Substanz;
f) Befüllen des vorderen Kapselteils mit einer dritten medizinisch wirksamen Substanz im Bereich zwischen dem im Wesentlichen geschlossenen vorderen Ende des vorderen Kapselteils und der Position, die zum Fixieren der zweiten Membrane vorgesehen ist;
g) Fixieren der zweiten Membrane an der dazu vorgesehenen Position im vorderen Kapselteil;
h) Einschieben des mittleren Kapselteils mit seinem vorderen Ende in des hintere Ende des vorderen Kapselteils bis zu der Position der zweiten Membrane.

Die Reihenfolge der Schritte kann dabei variieren. Ebenso können zwei oder mehr Schritte in der Praxis zu einem Verfahrensschritt zusammengefasst werden. Beispielsweise kann das Fixieren der ersten Membrane im hinteren Kapselteil gemäß Schritt c) erfolgen, indem die erste Membrane (vorzugsweise in einen ersten O-Ring eingespannt) beim Einschieben des mittleren Kapselteils in den hinteren Kapselteil nach Schritt d) vom hinteren Ende des mittleren Kapselteils bis zu jener Position geschoben wird, die für die erste Membrane vorgesehen ist (wobei der erste O-Ring dann in entsprechenden Ausführungsformen in eine zu seiner Fixierung vorgesehene erste Nut einrastet). In diesem Falle sind erfolgen also die Schritte c) und d) kombiniert. Entsprechendes gilt für die Schritt g) und h).

Ein weiterer Aspekt der Erfindung bezieht sich auf ein Verfahren zum Herstellen einer medizinisch wirksamen Mischsubstanz mit der erfindungsgemäßen Dreikammer-Kapsel. Das Verfahren weist dabei folgende Schritte auf:
A) Schieben des Kolbens in Richtung des vorderen Endes des hinteren Kapselteils bis zum ersten Stopppunkt;
B) Drehen des Kolbens um seine Längsachse um einen ersten vordefinierten Winkel;
C) Schieben des Kolbens in Richtung des vorderen Endes des mittleren Kapselteils bis zum zweiten Stopppunkt;
D) Drehen des Kolbens um seine Längsachse um einen zweiten vordefinierten Winkel;
E) Schieben des Kolbens in Richtung des vorderen Endes des vorderen Kapselteils bis zum im Wesentlichen geschlossenen vorderen Ende des vorderen Kapselteils.

Therapeutische oder chirurgische Behandlungsverfahren sind von Schritt E) ausgenommen. In Schritt C) wird folglich die erste Membrane mit dem Kolben durchstoßen, so dass im Anschluss ein Vermischen der ersten Substanz mit der zweiten Substanz stattfindet. Anschließend wird in Schritt E) auch die zweite Membrane mit dem Kolben durchstoßen, so dass im Anschluss ein Vermischen der (bereits vermischten) ersten und zweiten Substanz mit einer dritten Substanz stattfindet, bevor durch ein Weiterschieben des Kolbens bis zum Anschlag an das vordere Ende des vorderen Kapselteils dann ein Ausbringen der vermischten ersten, zweiten und dritten Substanz durch die Mündung oder den Auslass im vorderen Ende des vorderen Kapselteils erfolgt. Insbesondere erfolgt also das Mischen der drei Ausgangssubstanzen sequenziell; d. h., zunächst werden ohne den Einfluss der dritten Substanz nur die erste und zweite Substanz zu einer ersten Mischsubstanz vermischt, und diese erste Mischsubstanz wird anschließend mit der dritten Substanz zu der endgültigen Mischsubstanz vermischt.

Weitere Aspekte der vorgestellten Erfindung ergeben sich aus den abhängigen Ansprüchen sowie der folgenden Beschreibung.

### Kurzbeschreibung der Zeichnung

Ausführungsbeispiele der Erfindung werden anhand der Zeichnungen und der nachfolgenden Beschreibung näher erläutert.
- Fig. 1: ist eine Explosionszeichnung einer Ausführungsform des erfindungsgemäßen Dreiammer-Kapsel-Applikationssystems;
- Fig. 2: zeigt eine dreidimensionale Ansicht einer Ausführungsform des erfindungsgemäßen Dreiammer-Kapsel-Applikationssystems (ohne Membranen) in (a) zerlegtem Zustand und (b) in zu einer Dreikammer-Kapsel zusammengesetztem Zustand;
- Fig. 3: zeigt verschiedene Ansichten einer Ausführungsform des vorderen Kapselteils;
- Fig. 4: zeigt verschiedene Ansichten einer Ausführungsform des mittleren Kapselteils;
- Fig. 5: zeigt verschiedene Ansichten einer Ausführungsform des hinteren Kapselteils;
- Fig. 6: zeigt verschiedene Ansichten einer Ausführungsform des Stempels mit einem Kolben;
- Fig. 7: zeigt alternative Ausführungsformen des vorderen Kapselteils in dreidimensionaler Ansicht; und
- Fig. 8: zeigt Beispiele verschiedener handelsüblicher Kapselmischer (Stand der Technik).

### Figurenbeschreibung

Nachfolgend werden bevorzugte Ausführungsformen und Merkmale der vorliegenden Erfindung ausführlicher mit Bezug auf die beigefügten Zeichnungen beschrieben, in denen beispielhafte Ausführungsformen der Erfindung gezeigt sind. In den Zeichnungen verweisen gleiche Bezugszeichen auf gleiche Elemente. Umgekehrt können jedoch sich entsprechende Elemente in verschiedenen Zeichnungen mit verschiedenen Bezugszeichen versehen sein, wenn sich eine Passage der Beschreibung auf eine ganz bestimmte Zeichnung beziehen soll. Redundante Beschreibungen werden weggelassen. Der Begriff "und/oder", wie er hier verwendet wird, umfasst beliebige und alle Kombinationen von einem oder mehreren der zugehörigen aufgelisteten Elemente. Des Weiteren bezieht sich die Verwendung von "kann", wenn Ausführungsformen der vorliegenden Erfindung beschrieben werden, auf "eine oder mehrere Ausführungsformen der vorliegenden Erfindung".

Es versteht sich, dass Ausdrücke wie "erstes" und "zweites" zur Beschreibung verschiedener Elemente verwendet werden, diese Elemente jedoch nicht durch diese Ausdrücke beschränkt sind. Diese Ausdrücke werden nur verwendet, um ein Element von einem anderen Element zu unterscheiden. Zum Beispiel kann ein erstes Element als zweites Element bezeichnet werden, und in ähnlicher Weise kann ein zweites Element als erstes Element bezeichnet werden, ohne vom Schutzumfang der vorliegenden Erfindung abzuweichen.

In der folgenden Beschreibung von Ausführungsformen der vorliegenden Erfindung kann die Verwendung des Singulars auch den Plural umfassen, sofern sich aus dem Kontext nicht eindeutig etwas anderes angibt.

Relative Ausdrücke zur Beschreibung räumlicher Beziehungen wie "darunter", "unten", "darüber", "oben", "beabstandet" und dergleichen können nachfolgend zur Vereinfachung der Beschreibung verwendet werden, wobei die räumliche Beziehung eines Elements oder Merkmals zu einem anderen Element oder Merkmal dann so wie in den Abbildungen dargestellt zu verstehen ist. Es versteht sich, dass die räumlich relativen Ausdrücke zusätzlich zu der in den Figuren dargestellten Orientierung verschiedene Orientierungen der verwendeten Vorrichtung umfassen sollen. Wenn zum Beispiel eine in den Zeichnungen dargestellte Vorrichtung (und gegebenenfalls zugleich auch jedes der miteingezeichneten Koordinatensysteme) umgedreht wird, würden Elemente, die als "unter" anderen Elementen oder Merkmalen beschrieben sind, folglich "über" den anderen Elementen oder Merkmalen positioniert sein. Die Vorrichtung kann anderweitig orientiert sein (z. B. um 90° gedreht oder in anderen Orientierungen); in diesem Fall sind die hier verwendeten Präpositionen zur Beschreibung räumlicher Relationen entsprechend umzuinterpretieren.

Es versteht sich ebenfalls, dass, wenn ein erstes Element oder eine erste Schicht als "angebracht an" einem zweiten Element oder einer zweiten Schicht bezeichnet wird, die erste Schicht oder das erste Element direkt auf dem zweiten Element oder der zweiten Schicht angebracht sein kann oder aber mittels einem oder mehrerer dazwischenliegender weiterer Elemente oder Schichten an dem zweiten Element oder der zweiten Schicht angebracht sein kann. Darüber hinaus versteht es sich auch, dass, wenn ein Element oder eine Schicht als "zwischen" zwei anderen Elementen oder Schichten beschrieben wird, es das einzige Element oder die einzige Schicht zwischen den zwei anderen Elementen oder Schichten sein kann oder aber auch ein oder mehrere weitere dazwischenliegende Elemente oder Schichten vorhanden sein können.

Bisherige Methoden zur Lagerung reaktiver Mehrkomponentengemische schließen Spritzensysteme, Kapselmischsysteme und Handmischvarianten ein. Kapselsysteme bestechen dabei durch die Vereinigung von Lagerfähigkeit, Durchmischung und Applikation. Es ist hervorzuheben, dass nach dem Wissensstand der Erfinder bisher lediglich ein System zur Lagerung und Anwendung dreier Komponenten existiert (WO 2007/112981 A1). Dieses System ist jedoch auf das manuelle Mischen und Applizieren mittels eines Applizierpinsels beschränkt. Das nachfolgend anhand von Beispielen und den Zeichnungen vorgestellte Dreikammer-Kapsel-Applikationssystem 1 gewährleistet die Lagerung von drei reaktiven Komponenten (Substanzen) in durch Membranen jeweils voneinander getrennten Kammern, welche durch sequenzielles Durchstoßen geöffnet werden können. Somit kann auch ein sequenzielles Mischen der Einzelkomponenten gewährleistet werden. Zur Durchtrennung der Membranen und zum Ausdrücken des Fluides existiert ein Kolben, welcher in Ausführungsformen an vorderster Seite mit einem Dorn ausgestattet sein kann. Dieser Dorn durchdringt die Membran zuerst, sodass sich die restliche Membran leichter öffnen lässt. Der Durchmesser des Kolbens ist möglichst groß gewählt, sodass an den Seiten kein Fluid bei jedoch gleichzeitig guter Vorschiebbarkeit vorbeiströmt. Die Kammern sind zu diesem Zweck nicht vollständig mit den zu mischenden Substanzen gefüllt, sodass ein Anteil Gasraum verbleibt, welcher eine hinreichende Kompressibilität gewährleistet. Die Trennmembranen werden erst durch das Durchstoßen mit dem am Kolbenende befindlichen Dorn durchstoßen. Damit es zu keiner ungewollten Durchdringung der Membranen kommt, weist die Innenfläche der Dreikammer-Kapsel vorzugsweise ein Gangsystem auf, welches an bestimmten Punkten ein unmittelbares Vorschieben des Kolbens verhindert. Damit wird ein versehentliches Öffnen der Membranen unterbunden.

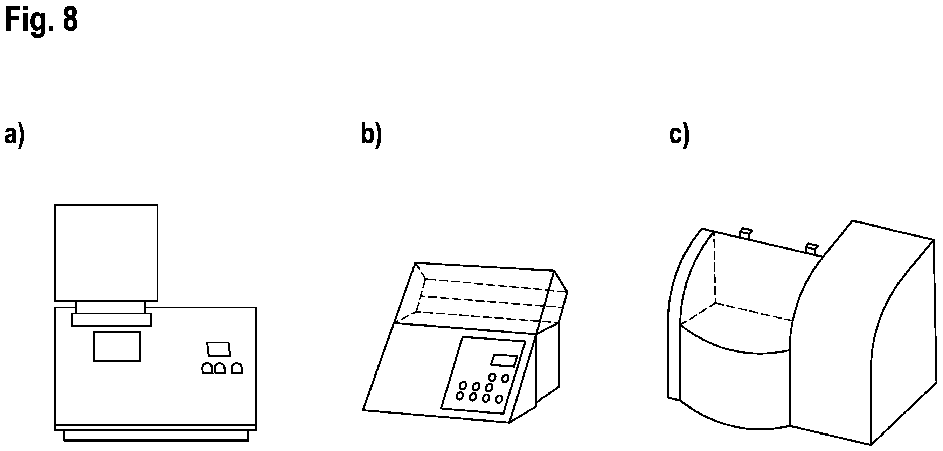

Die dem nachfolgend anhand von Ausführungsbeispielen und Zeichnungen näher erläuterten Dreikammer-Kammer-Applikationssystem zugrundeliegende Konstruktion besteht aus drei abgegrenzten Kammern zur Lagerung und Mischung reaktiver Substanzen für zahnmedizinische Anwendungen. Diese Kammern sind dabei dicht und verhindern ein ungewolltes Ein- oder Austreten der inneren Substanzen sowie ein vorzeitiges Abreagieren der Substanzen untereinander oder mit der Umgebungsatmosphäre. Die Kammern lassen sich zudem mit einfachsten Handgriffen sequenziell öffnen, damit die Substanzen vermischt werden können und insbesondere den Erfordernissen einer medizinischen oder zahnmedizinischen Anwendung im klinischen Setting eines Krankenhauses, einer Praxis oder einer Zahnarztpraxis genügen. In Ausführungsformen ist das erfindungsgemäße Dreikammer-Kammer-Applikationssystem zudem mit am Markt erhältlichen Mischautomaten (vgl. Figur 8) kompatibel.

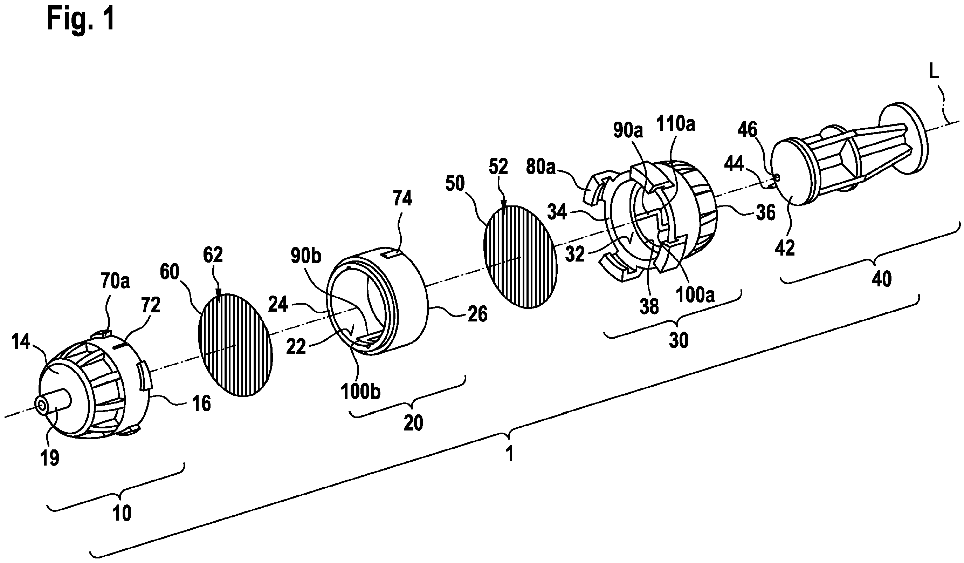

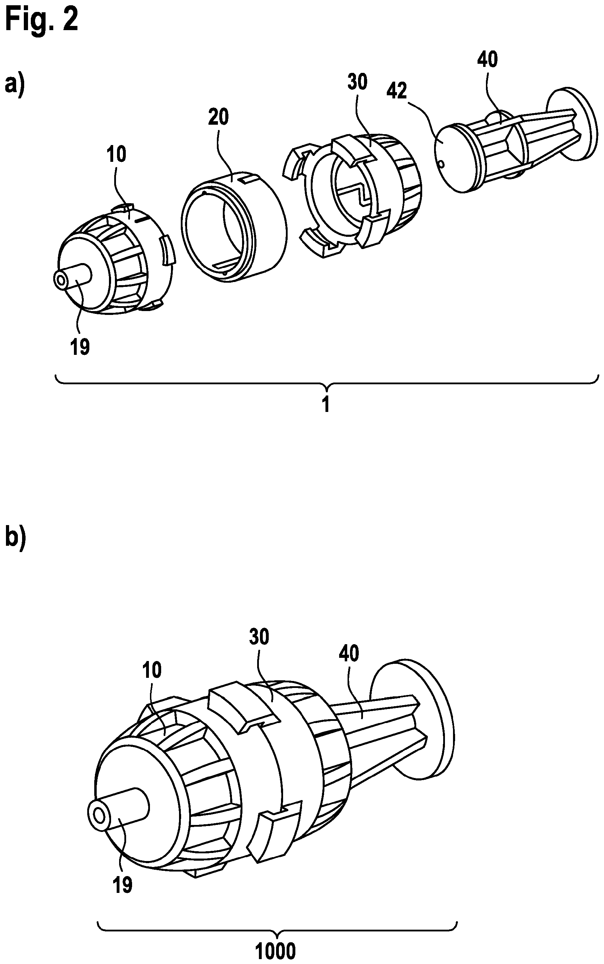

Figur 1 zeigt schematisch eine Explosionsansicht einer Ausführungsform des erfindungsgemäßen Dreikammer-Kapsel-Applikationssystems 1 zur Lagerung, Mischung und Ausbringung reaktiver Substanzen. Das in Fig. 1 gezeigte Dreikammer-Kapsel-Applikationssystems 1 weist insbesondere einen vorderen Kapselteil 10, einen mittleren Kapselteil 20 und einen hinteren Kapselteil 30 auf, die als eine Art Stecksystem miteinander verbindbar sind. Im hinteren Kapselteil 30 ist dabei eine erste Membrane 52 befestigbar, und im vorderen Kapselteil 10 ist eine zweite Membrane 62 befestigbar. Zudem ist im hinteren Kapselteil ein Kolben 42 eingeschoben. Das System aus vorderem Kapselteil 10, mittlerem Kapselteil 20, hinterem Kapselteil 30, Kolben 42 sowie der ersten Membrane 52 und der zweiten Membrane 62 lässt sich dann zu einer Dreikammer-Kapsel zusammensetzen, wie sie in Figur 2 (b) in dreidimensionaler Ansicht gezeigt ist, wobei der Kolben 42 in der gezeigten Ausführungsform Teil eines Stempels 40 ist. Figur 2 (a) zeigt eine dreidimensionale Ansicht der Komponenten, aus denen die Dreikammer-Kapsel 1000 von Fig. 2 (b) zusammengesetzt ist (ohne Membranen), also den vorderen Kapselteil 10, den mittleren Kapselteil 20, den hinteren Kapselteil 30 sowie den Stempel 40 mit dem Kolben 42.

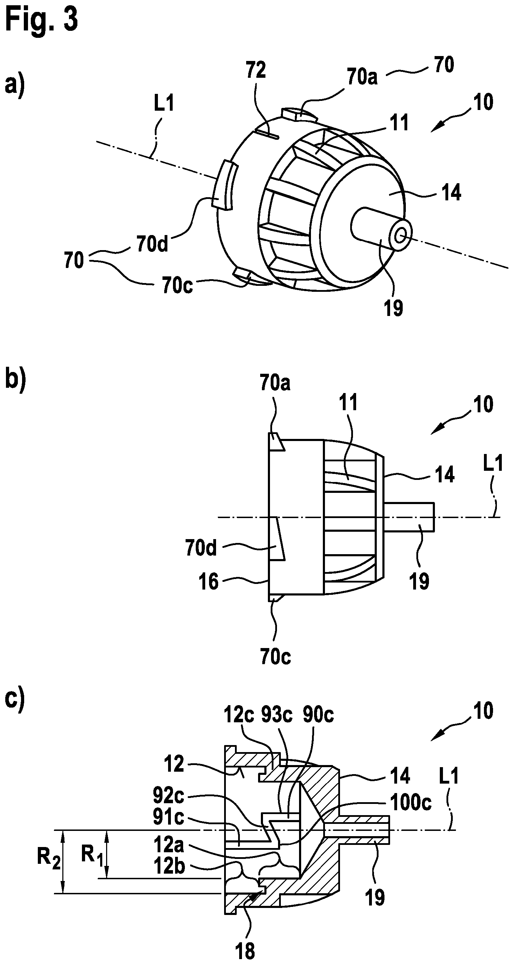

Zunächst sei nachfolgend das in der gezeigten Ausführungsform verwendete vordere Kapselteil 10 anhand von Figur 3 genauer beschrieben. Das vordere Kapselteil 10 wird in Fig. 3 (a) in einer dreidimensionalen Ansicht gezeigt, Fig. 3 (b) zeigt eine Seitenansicht des vorderen Kapselteils 10, und in Fig. 3 (c) ist ein Schnitt des vorderen Kapselteils 10 entlang seiner Längsachse L1 abgebildet. Das vordere Kapselteil 10 weist eine Innenoberfläche 12 auf, die im Wesentlichen rotationssymmetrisch um die Längsachse L1 des vorderen Kapselteils 10 ist. In Fig. 3 (a), (b) und (c) ist die Längsachse L1 jeweils schematisch als strich-punktierte Linie angedeutet. Die Innenseite 12 des vorderen Kapselteils 10 weist dabei eine Gestalt auf, die man sich im Wesentlichen als zwei entlang der Längsachse L1 (nachfolgend auch kurz als Achse L1 bezeichnet) aneinandergesetzte Zylinder denken kann, die verschiedene Radii aufweisen. Die relativen Größen dieser Radii werden unten im Zusammenhang mit dem mittleren Kapselteil 20 beschrieben. Die Innenseiten dieser beiden Zylinder bilden folglich zwei Bereiche - einen ersten Bereich 12a und einen zweiten Bereich 12b - der Innenoberfläche 12 des vorderen Kapselteils 10, die durch eine - natürlich ebenfalls um die Achse L1 rotationssymmetrische - Stufe oder Kante 12c miteinander verbunden sind.

Der erste Bereich 12a der Innenseite 12 des vorderen Kapselteils 10 weist eine dritte Führungsnut 90c auf, dessen Gestalt und Funktion unten im Zusammenhang mit dem Kolben 42 näher erläutert wird. (Eine erste und zweite Führungsnut werden nachfolgend im Kontext des hinteren Kapselteils 30 beziehungsweise des mittleren Kapselteils 20 beschrieben.)

Im Innenbereich des vorderen Kapselteils 10 kann an einer (entlang der Achse L1 betrachtet) vordefinierten Position 18 eine erste Membrane 52 fixiert werden. Dazu kann der zweite Bereich 12b der Innenseite 12 eine erste Nut zur Aufnahme / zum Einrasten eines ersten O-Rings 50 aufweisen, in/an dem wiederum die erste Membrane 52 fixiert ist. Diese Nut befindet sich vorteilhaft an einer (entlang der Längsachse L1 gemessen / betrachtet) an die Stufe oder Kante 12c angrenzenden Position 18 im zweiten Bereich 12b. Vorzugsweise verläuft die erste Nut dabei kreisförmig am zweiten Innenseitenbereich 12b entlang und senkrecht zur Längsachse L1.

Das sich daraus ergebende Profil der Innenoberfläche 12 des vorderen Kapselteils 10 lässt sich insbesondere der Fig. 3 (c) entnehmen. Der in Fig. 3 (c) im Längsschnitt links dargestellte Zylinder mit der Innenseite 12b weist - in Fig. 3 (b) und (c) jeweils links dargestellt - ein hinteres offenes Ende auf, so dass das hintere Ende 16 des vorderen Kapselteils 10 also offen ist. Der in Fig. 3 (c) im Längsschnitt rechts dargestellte Zylinder mit der Innenseite 12a weist hingegen - in Fig. 3 (b) und (c) jeweils rechts dargestellt - ein vorderes Ende 14 auf, das im Wesentlichen - bis auf Öffnung, an die sich eine Mündung oder eine Auslass 19 anschließen kann - geschlossen ist; der rechts dargestellte Innenseite 12a ist also im Wesentlichen ein halboffener Zylinder.

Die Außenfläche des vorderen Kapselteils 10 muss nicht zwangsläufig ähnlich zu dessen Innenoberfläche 12 gestaltet sein; in der in Fig. 3 gezeigten Ausführungsform ist dies jedoch der Fall. In der gezeigten Ausführungsform weist die Außenseite des vorderen Kapselteils 10 zudem Streben 11 auf, die der Stabilisierung dienen, insbesondere zur Stabilisierung der Stufe oder Kante 12c.

Zudem ist das hintere Ende 16 des vorderen Kapselteils 10 mit dem vorderen Ende 34 des hinteren Kapselteils 30 (siehe unten) verbindbar. Zu diesem Zweck sind bei der gezeigten Ausführungsform am hinteren Ende 16 des vorderen Kapselteils 10 auf der Außenfläche des vorderen Kapselteils 10 an vordefinierten Positionen Vorsprünge 70a, 70b, 70c, 70d angebracht, die in Eingriff mit entsprechend positionierten Klammern 80a, 80b, 80c, 80d an der Außenseite des hinteren Kapselteils 30 gebracht werden können; die Vorsprünge 70a, 70b, 70c, 70d des vorderen Kapselteils 10 bilden also zusammen mit den Klammern 80a, 80b, 80c, 80d des hinteren Kapselteils 30 einen Bajonettverschluss. Die in Fig. 3 gezeigte Ausführungsform weist insbesondere vier Vorsprünge 70a, 70b, 70c, 70d auf, die jeweils um einen Winkel von 90° bezüglich der Längsachse L1 versetzt zueinander angebracht sind. Es versteht sich, dass alternative Ausführungsformen auch Bajonettverschlüsse mit einer anderen Anzahl an Vorsprüngen (und entsprechenden Klammern) aufweisen können. Ebenso können sich alternativ am vorderen Kapselteil 10 die Klammern 80a, 80b, 80c, 80d befinden, während sich am hinteren Kapselteil 30 dann die Vorsprünge 70a, 70b, 70c, 70d befinden könnten. Es versteht sich weiterhin, dass das erfindungsgemäße Dreikammer-Kapsel-Applikationssystem 1 nicht auf die Verwendung eines Bajonettverschlusses begrenzt ist; vielmehr können alle Verbindungen zum Einsatz kommen, durch das vordere Kapselteil 10 - möglichst auf einfache Weise - mit dem hinteren Kapselteil 30 verbunden werden kann, beispielsweise durch eine Schnappverbindung. In Ausführungsformen kann die Verbindung dabei so ausgestaltet sein, dass sich das vordere Kapselteil 10 mit dem hinteren Kapselteil 30 nur auf eine einzige Weise verbinden lässt (also in einer vordefinierten Verbindungsposition), so dass also insbesondere Drehversetzungen um einen bestimmten oder auch beliebigen Winkel bei der Verbindung gegenüber der vordefinierten Verbindungsposition verhindert werden.

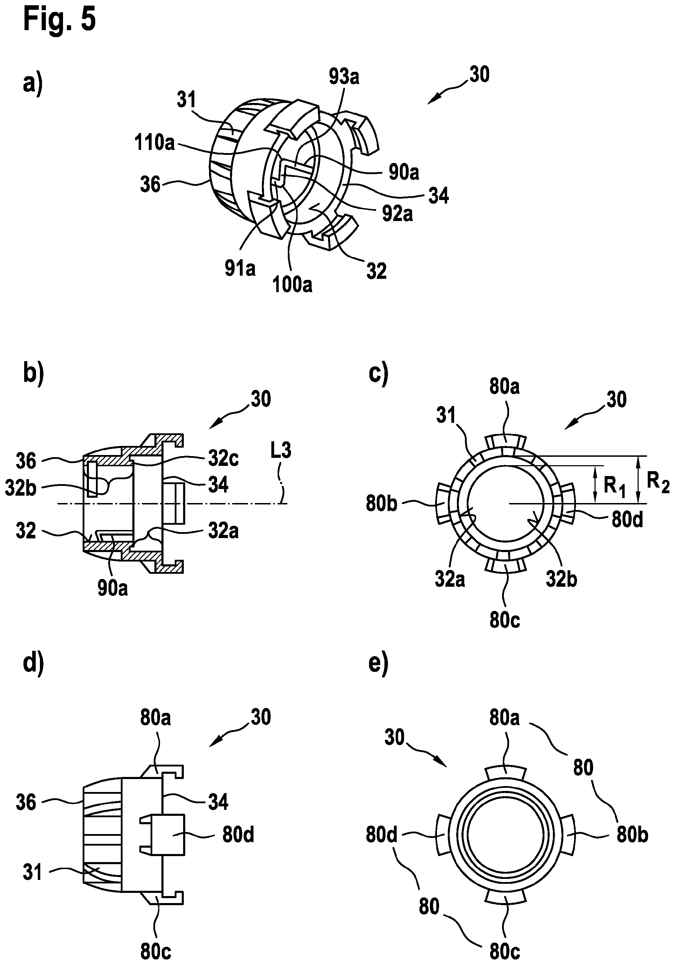

Nachfolgend sei nun das in der gezeigten Ausführungsform verwendete hintere Kapselteil 30 anhand von Figur 5 genauer beschrieben. Das hintere Kapselteil 30 wird in Fig. 5 (a) in einer dreidimensionalen Ansicht gezeigt. In Fig. 5 (b) ist ein Schnitt des hinteren Kapselteils 30 entlang seiner Längsachse L3 abgebildet. Ferner zeigt Fig. 5 (c) eine Draufsicht auf das hintere Kapselteil 30 in Richtung seiner Längsachse L3, und Fig. 5 (d) zeigt eine Seitenansicht des hinteren Kapselteils 30. Schließlich zeigt Fig. 5 (e) eine Hinteransicht des hinteren Kapselteils 30 in Richtung seiner Längsachse L3.

Ähnlich wie das vordere Kapselteil 10 (siehe oben) weist auch das hintere Kapselteil 30 eine Innenoberfläche 32 auf, die im Wesentlichen rotationssymmetrisch um die Längsachse L3 des hinteren Kapselteils 30 ist. In Fig. 5 (b) ist die Längsachse L3 schematisch als strich-punktierte Linie angedeutet. Die Innenseite 32 des hinteren Kapselteils 30 weist dabei eine Gestalt auf, die man sich im Wesentlichen als zwei entlang der Längsachse L3 (nachfolgend auch kurz als Achse L3 bezeichnet) aneinandergesetzte Zylinder denken kann, die verschiedene Radii aufweisen. Die relativen Größen dieser Radii werden unten im Zusammenhang mit dem mittleren Kapselteil 20 beschrieben. Die Innenseiten dieser beiden Zylinder bilden folglich zwei Bereiche - einen ersten Bereich 32a und einen zweiten Bereich 32b - der Innenoberfläche 32 des hinteren Kapselteils 30, die durch eine - natürlich ebenfalls um die Achse L3 rotationssymmetrische - Stufe oder Kante 32c miteinander verbunden sind.

Der zweite Bereich 32b der Innenseite 32 des hinteren Kapselteils 30 weist eine erste Führungsnut 90a auf, dessen Gestalt und Funktion unten im Zusammenhang mit dem Kolben 42 näher erläutert wird.

Im Innenbereich des hinteren Kapselteils 30 kann an einer (entlang der Achse L3 betrachtet) vordefinierten Position 38 eine zweite Membrane 62 fixiert werden. Dazu kann der erste Bereich 32a der Innenseite 32 eine zweite Nut zur Aufnahme / zum Einrasten eines zweiten O-Rings 60 aufweisen, in/an dem wiederum die erste Membrane 62 fixiert ist. Diese Nut befindet sich vorteilhaft an einer (entlang der Längsachse L3 gemessen / betrachtet) an die Stufe oder Kante 32c angrenzenden Position 38 im ersten Bereich 32a. Vorzugsweise verläuft die zweite Nut dabei kreisförmig am ersten Innenseitenbereich 32a entlang und senkrecht zur Längsachse L3.

Das sich daraus ergebende Profil der Innenoberfläche 32 des hinteren Kapselteils 30 lässt sich insbesondere der Fig. 5 (b) entnehmen. Der in Fig. 5 (b) im Längsschnitt links dargestellte Zylinder mit der Innenseite 32b weist - in Fig. 5 (b) links dargestellt - ein hinteres offenes Ende auf, so dass das hintere Ende 36 des hinteren Kapselteils 30 also offen ist. Der in Fig. 5 (b) im Längsschnitt rechts dargestellte Zylinder mit der Innenseite 32a weist - in Fig. 5 (b) rechts dargestellt - ein vorderes Ende 34 auf, das ebenfalls offen ist.

Die Außenfläche des hinteren Kapselteils 30 muss nicht zwangsläufig ähnlich zu dessen Innenoberfläche 32 gestaltet sein; in der in Fig. 5 gezeigten Ausführungsform ist dies jedoch der Fall. In der gezeigten Ausführungsform weist die Außenseite des hinteren Kapselteils 30 zudem Streben 31 auf, die der Stabilisierung dienen, insbesondere zur Stabilisierung der Stufe oder Kante 32c.

Zudem ist das vordere Ende 34 des hinteren Kapselteils 30 mit dem hinteren Ende 16 des vorderen Kapselteils 10 (siehe oben) verbindbar. Zu diesem Zweck sind bei der gezeigten Ausführungsform am vorderen Ende 34 des hinteren Kapselteils 30 auf der Außenfläche des hinteren Kapselteils 30 an vordefinierten Positionen Klammern 80a, 80b, 80c, 80d angebracht, die in Eingriff mit entsprechend positionierten Vorsprünge 70a, 70b, 70c, 70d an der Außenseite des vorderen Kapselteils 10 gebracht werden können; die Klammern 80a, 80b, 80c, 80d des hinteren Kapselteils 30 bilden also zusammen mit den Vorsprüngen 70a, 70b, 70c, 70d des vorderen Kapselteils 10 einen Bajonettverschluss. Die in Fig. 5 gezeigte Ausführungsform weist insbesondere vier Klammern 80a, 80b, 80c, 80d auf, die jeweils um einen Winkel von 90° bezüglich der Längsachse L3 versetzt zueinander angebracht sind. Es versteht sich, dass alternative Ausführungsformen auch andere Befestigungsmittel zum Verbinden des hinteren Kapselteils 30 mit dem vorderen Kapselteil 10 aufweisen können; es gilt das oben bereits bei der Beschreibung des vorderen Kapselteils 10 Gesagte entsprechend.

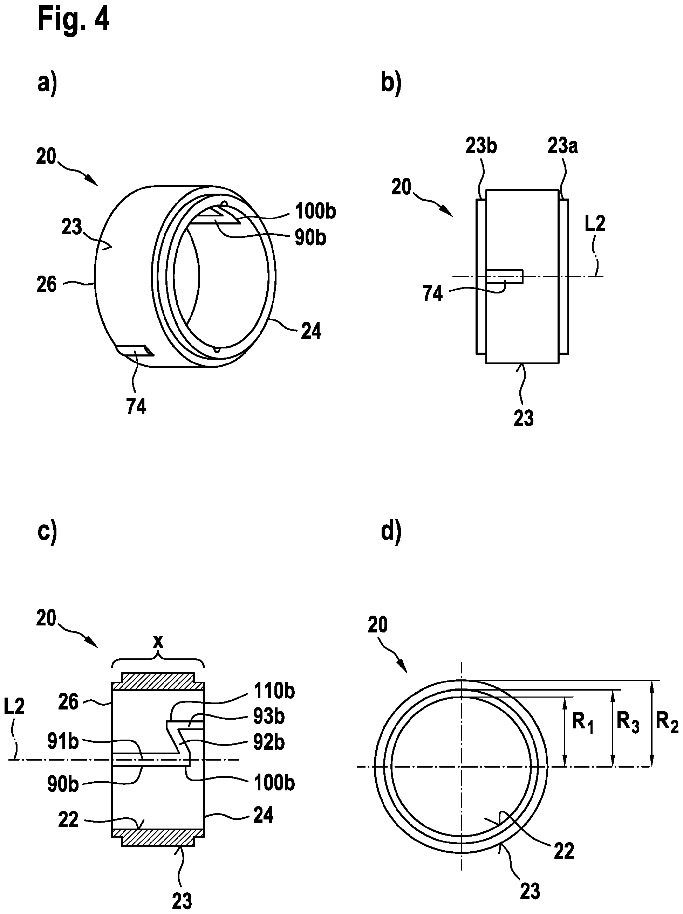

Das erfindungsgemäße Dreikammer-Kapsel-Applikationssystem 1 weist ferner ein mittleres Kapselteil auf. Das mittlere Kapselteil sei nachfolgend anhand des in Figur 4 illustrierten Beispiels erläutert, das als mittleres Kapselteil 20 in der in Fig. 1 gezeigten Ausführungsform des Dreikammer-Kapsel-Applikationssystem 1 eingesetzt werden kann. In den Figuren 4 (a) bis (d) ist beispielhaft ein mittleres Kapselteil 20 in dreidimensionaler Ansicht, in Seitenansicht, im Längsschnitt entlang der Längsachse L2 des mittleren Kapselteils 20 beziehungsweise in Draufsicht in Richtung der Längsachse L2 dargestellt. Die Längsachse L2 (nachfolgend auch kurz als Achse L2 bezeichnet) ist in Fig. 4 (b) schematisch als strich-punktierte Linie angedeutet. Das mittlere Kapselteil 20 weist im Wesentlichen die Gestalt eines beidseitig offenen Zylinders auf, dessen Enden nachfolgend als vorderes Ende 24 (in Fig. 4 (c) das rechte Ende) und hinteres Ende 26 (in Fig. 4 (c) das linke Ende) bezeichnet werden. Insbesondere sind Innenseite 22 und Außenseite 23 des mittleren Kapselteils 20 im Wesentlichen zylinderförmig, wobei die Innenseite 22 einen ersten Radius R₁ (entspricht dem Abstand der Achse L2 zur Innenseite 22) und die Außenseite 23 einen zweiten Radius R₂ (entspricht dem Abstand der Achse L2 zur Außenseite 23) mit R₂ > R₁ aufweist. Beispielsweise kann der erste Radius R₁ = 7,5 mm oder R₁ ≈ 7,5 mm und der zweite Radius R₂ = 9,5 mm oder R₂ ≈ 9,5 mm betragen. Vorteilhaft weist das mittlere Kapselteil 20 eine Länge auf, die dem Abstand der für die Fixierung der ersten Membrane 52 Position 38 im hinteren Kapselteil 30 und der für die Fixierung der zweiten Membrane 62 Position 18 im vorderen Kapselteil 10 entspricht. In alternativen Ausführungsformen kann die Länge insbesondere auch kleiner sein, etwa wenn noch Platz für Membranen und/oder deren Befestigungsmechanismen im vorderen und/oder hinteren Kapselteil benötigt wird.

Die Innenseite 22 des mittleren Kapselteils 20 weist eine zweite Führungsnut 90b auf, dessen Gestalt und Funktion unten im Zusammenhang mit dem Kolben 42 näher erläutert wird.

Am vorderen Ende 24 des mittleren Kapselteils 20 kann dessen Außenfläche 23 einen abgeflachten Bereich 23a aufweisen. Dieser abgeflachte Außenseitenbereich 23a kann ebenfalls zylinderförmig gestaltet sein, wobei der durch den Außenseitenbereich 23a gebildete Zylinder einen dritten Radius R₃ in Bezug auf die Achse L₂ aufweist, der größer als der erste Radius R₁ und kleiner als der zweite Radius R₂ ist; es gilt also R₁ < R₂ < R₃. Beispielsweise kann der dritte Radius R₃ = 8,5 mm oder R₃ ≈ 8,5 mm betragen. Ebenso kann am hinteren Ende 26 des mittleren Kapselteils 20 dessen Außenfläche 23 einen abgeflachten Bereich 23b aufweisen. Dieser abgeflachte Außenseitenbereich 23b kann ebenfalls zylinderförmig gestaltet sein, wobei der durch den Außenseitenbereich 23b gebildete Zylinder wiederum den dritten Radius R₃ in Bezug auf die Achse L2 aufweist. Auf die abgeflachten Enden des mittleren Kapselteils 20 lassen sich dann auf einfache Weise O-Ringe (siehe unten) aufstecken, oder das mittleren Kapselteils 20 kann in solche O-Ringe hineingeschoben werden.

Das mittlere Kapselteil 20 ist sowohl in das vordere Kapselteil 10 als auch das hintere Kapselteil 30 einsteckbar oder einführbar. Insbesondere ist das mittlere Kapselteil 20 mit seinem vorderen Ende 24 in das vordere Kapselteil 10 durch dessen hinteres Ende 16 einschiebbar und kann dann bis zur Stufe oder Kante des 12c der Innenoberfläche 12 des vorderen Kapselteils 10 eingeschoben werden (vgl. Figuren 1, 2 (a) und 3 (c)). Mit anderen Worten: das mittlere Kapselteil 20 kann in den zweiten Bereich 12b der Innenoberfläche 12 des vorderen Kapselteils 10 eingeschoben werden. Ebenso ist das mittlere Kapselteil 20 mit seinem hinteren Ende 26 in das hintere Kapselteil 30 durch dessen vorderes Ende 34 einschiebbar und kann dann bis zur Stufe oder Kante des 32c der Innenoberfläche 32 des hinteren Kapselteils 30 eingeschoben werden (vgl. Figuren 1, 2 (a) und 5 (b)). Mit anderen Worten: das mittlere Kapselteil 20 kann in den ersten Bereich 32a der Innenoberfläche 32 des hinteren Kapselteils 30 eingeschoben werden.

Um dies zu ermöglichen, müssen die Innenradien des vorderen Kapselteils 10 und des hinteren Kapselteils 30 geeignet auf den Außenradius R₂ des mittleren Kapselteils 20 abgestimmt sein. Vorteilhaft entspricht daher der zylinderförmige zweite Bereich 12b der Innenoberfläche 12 des vorderen Kapselteils 10 dem Außenradius R₂ des mittleren Kapselteils 20 (oder ist minimal größer als letzterer gewählt, vgl. unten); mit anderen Worten, der zylinderförmige zweite Bereich 12b der Innenoberfläche 12 des vorderen Kapselteils 10 weist ebenfalls den Radius R₂ auf. Vorteilhaft entspricht daher ferner der zylinderförmige erste Bereich 32a der Innenoberfläche 32 des hinteren Kapselteils 30 ebenfalls dem Außenradius R₂ des mittleren Kapselteils 20 (oder ist minimal größer als letzterer gewählt, vgl. unten); mit anderen Worten, der zylinderförmige erste Bereich 32a der Innenoberfläche 32 des hinteren Kapselteils 30 weist den Radius R₂ auf.

Um das Einstecken des mittleren Kapselteils 20 in den vorderen Kapselteil 10 und/oder den hinteren Kapselteil 30 zu erleichtern, kann der Radius des die Außenseite 23 des mittleren Kapselteils 20 bildenden Zylinders auch etwas kleiner gewählt werden als der Radius des im Wesentlichen zylindrischen zweiten Innenseitenbereichs 12b des vorderen Kapselteils 10 beziehungsweise als der Radius des im Wesentlichen zylindrischen ersten Innenseitenbereichs 32a des hinteren Kapselteils 30. Wird also der Radius des im Wesentlichen zylindrischen zweiten Innenseitenbereichs 12b des vorderen Kapselteils 10 mit R₂ bezeichnet, so kann in Ausführungsformen für den Zylinder, der die Außenseite 23 des mittleren Kapselteils 20 im Wesentlichen bildet, also anstelle von R₂ ein Radius R₂ - ΔR₂ mit ΔR₂ > 0 mm gewählt werden, wobei ΔR₂ wesentlich kleiner (also mindestens um einen Faktor 10 kleiner) ist als der Radius des im Wesentlichen zylindrischen zweiten Innenseitenbereichs 12b des vorderen Kapselteils 10. Wenn beispielsweise der erste Radius R₂ = 9,5 mm beträgt, so kann zum Beispiel ΔR₂ = 0,05 mm gewählt werden, so dass sich bei dieser Ausführungsform folglich für den Zylinder, der die Außenseite 23 des mittleren Kapselteils 20 im Wesentlichen bildet, der Radius R₂ - ΔR₂ = 9,5 mm - 0,05 mm = 9,45 mm ergibt. Dies gilt in entsprechender Weise für das Zusammenspiel von mittlerem Kapselteil 20 und hinterem Kapselteil 30.

Insbesondere im Hinblick auf das Zusammenspiel der unten näher erläuterten Führungsnuten 90a, 90b, 90c des hinteren, mittleren und vorderen Kapselteils ist das mittlere Kapselteil 20 in den hinteren Kapselteil 30 vorzugsweise nur in einer vordefinierten Drehposition (in Bezug auf die beim Einschieben dann zusammenfallenden Längsachsen L2 und L3 des mittleren beziehungsweise hinteren Kapselteils) einschiebbar und ist zudem nach dem Einschieben verdrehgesichert im hinteren Kapselteil 30 eingesteckt. Dazu kann das mittlere Kapselteil 20 auf seiner Außenfläche 23 einen Vorsprung 74 aufweisen, der beim Einschieben in eine entsprechende Kerbe (in den Figuren nicht gezeigt) im ersten Innenseitenbereich 32a des hinteren Kapselteils 30 eingreift und in dieser entlanggeschoben werden kann. In alternativen Ausführungsformen des Dreikammer-Kapsel-Applikationssystems 1 kann eine entsprechende Verdrehsicherung zwischen dem mittleren Kapselteil 20 und dem vorderen Kapselteil 10 vorgesehen sein oder auch zwischen dem mittleren Kapselteil 20 und sowohl dem vorderen als auch dem hinteren Kapselteil. Ebenso können in Ausführungsformen alternative Mittel zur Verdrehsicherung vorgesehen sein.

Die vorstehend beschriebenen drei Kapselteile der anhand der in den Figuren 1 bis 6 gezeigten Ausführungsform des Dreikammer-Kapsel-Applikationssystem 1 können folglich so zusammengesteckt und verbunden werden, dass das vordere Kapselteil 10 mit dem hinteren Kapselteil 30 über einen Bajonettverschluss 70, 80 verbindbar ist, während das mittlere Kapselteil 20 sowohl in den vordere Kapselteil 10 als auch in den hinteren Kapselteil 30 eingeschoben ist, wobei die Längsachsen L1, L2 und L3 des vorderen, mittleren beziehungsweise hinteren Kapselteils zu einer gemeinsamen Längsachse L zusammenfallen. Insbesondere erstreckt sich beim zusammengesetzten System aus den drei Kapselteilen 10, 20, 30 das mittlere Kapselteil 20 entlang des Bereichs von der für die Fixierung der ersten Membrane 52 vorgesehenen Position 38 im hinteren Kapselteil bis zur der für die Fixierung der zweiten Membrane 62 vorgesehenen Position 18 im vorderen Kapselteil.

Ist in das hintere Ende 36 des hinteren Kapselteils 30 zudem ein Kolben 42 eingeschoben (siehe unten), der sich im zweiten Innenseitenbereich 32b des hinteren Kapselteils 30 befindet, so entsteht auf diese Weise eine Kapsel, deren Kapselinnenraum in Längsrichtung L durch den zweiten Innenseitenbereich 32b des hinteren Kapselteils 30, die daran anschließende Innenseite 22 des mittleren Kapselteils 20 sowie den wiederum an diese anschließenden ersten Innenseitenbereich 12a des vorderen Kapselteils 10 gebildet wird. Quer zur Längsrichtung L wird dieser Kapselinnenraum einerseits durch das vordere Ende 14 des vorderen Kapselteils 10 und andererseits durch den Kolben 42 abgeschlossen / begrenzt.

Um den vorstehend beschriebenen Kapselinnenraum nun in drei separate Kammern zu unterteilen, werden - bevor das System zusammengesetzt wird - im hinteren und vorderen Kapselteil 30, 10 jeweils Membranen 52, 62 an vordefinierten Positionen 38, 18 angebracht. Diese Membranen können auch während des Einschiebens des mittleren Kapselteils in die anderen Kapselteile durch das mittlere Kapselteil an ihre jeweilige Position geschoben werden. Beispielsweise kann die zur Fixierung im hinteren Kapselteil 30 vorgesehene erste Membrane 52 zunächst auf das hintere Ende 26 des mittleren Kapselteils 20 aufgesetzt oder aufgesteckt werden, und anschließend wird das mittlere Kapselteil 20 dann mit seinem hinteren Ende 26 durch das vordere Ende 34 des hinteren Kapselteils 30 dann in den ersten Innenseitenbereich 32a des hinteren Kapselteils bis zum Anschlagen an die Stufe oder Kante 32c eingeführt; die erste Membrane 52 ist dann zwischen dem hinteren Ende 26 des mittleren Kapselteils 20 und der Stufe oder Kante 32c der Innenseite 32 des hinteren Kapselteils 30 fixiert. Es versteht sich, dass alternativ auch zunächst die Membrane 52 in den hinteren Kapselteil 30 vor der Stufe oder Kante 32c geschoben werden kann, und anschließend der mittlere Kapselteil 20 wie oben beschrieben in das hintere Kapselteil 30 eingeführt wird. Die vorstehend beschriebenen Befestigungsmethoden können in entsprechender Weise auch auf die Befestigung der zweiten Membrane 62 im vorderen Kapselteil 10 angewendet werden.

Zur Vereinfachung der Handhabung, Positionierung und/oder Befestigung der Membranen können diese jeweils auf einem O-Ring aufgespannt sein. Ein solcher O-Ring kann dann in Ausführungsformen des Dreikammer-Kapsel-Applikationssystems 1 auf einen der abgeflachten Bereiche 23a oder 23b an den Enden des mittleren Kapselteils 20 (siehe oben zu Fig. 4) aufgestülpt werden. Zu diesem Zweck weist der O-Ring vorteilhaft den Innenradius R₃ auf. Zusätzlich oder alternativ können sich im vorderen und/oder hinteren Kapselteil ringförmige / kreisförmige Nuten zur Aufnahme oder zum Einrasten eines solchen O-Rings befinden (siehe oben zu Figur 3 und 5). Zudem kann der O-Ring einseitig durch eine Stufe oder Kante 12c, 32c im vorderen beziehungsweise hinteren Kapselteil gestützt werden. Ist R₁ der Radius des zylindrischen zweiten Innenseitenbereichs 32b des hinteren Kapselteils 30, so weist ein zum Aufspannen der ersten Membrane 62 vorgesehener erster O-Ring vorzugsweise einen entsprechenden Außenradius R₁ auf. Ist ferner R₁ der Radius des zylindrischen ersten Innenseitenbereichs 12a des vorderen Kapselteils 10, so weist ein zum Aufspannen der zweiten Membrane 62 vorgesehener zweiter O-Ring vorzugsweise einen entsprechenden Außenradius R₁ auf.

Der mittlere Kapselteil 20 dient in dieser Ausführungsform also auch als Abstandshalter zwischen den beiden Membranen 52, 62 und fungiert gleichzeitig als Führung für die Membranen 52, 62, welche die drei Kammern voneinander abtrennen. Die Membranen 52, 62 bestehen dabei vorzugsweise jeweils aus Aluminium oder Kunststoffen und können, wie vorstehend bereits beschrieben, durch O-Ringe fest eingebracht werden.

Durch die wie vorstehend beschrieben positionierten Membranen ist der Kapselinnenraum des zusammengesetzten Dreikammer-Kapsel-Applikationssystems 1 also in drei Kammern unterteilt: Eine erste Kammer befindet sich in Längsrichtung L zwischen Kolben 42 und erster Membrane 52 und wird in radialer Richtung durch den zweiten Bereich 32b der Innenseite 32 des hinteren Kapselteils 30 begrenzt. Eine zweite Kammer befindet sich in Längsrichtung L zwischen erster Membrane 52 und zweiter Membrane 62 und wird in radialer Richtung durch die Innenseite 22 des mittleren Kapselteils 20 begrenzt. Eine dritte Kammer befindet sich schließlich in Längsrichtung L zwischen zweiter Membrane 62 und vorderem Ende 14 des vorderen Kapselteils 10 und wird in radialer Richtung durch den ersten Bereich 12a der Innenseite 12 des vorderen Kapselteils 10 begrenzt.

Das wie vorstehend zusammengesetzte System aus Kolben 42, hinterem Kapselteil 30, erster Membrane 52, mittlerem Kapselteil 20, zweiter Membrane 62 und vorderem Kapselteil 10 bildet also eine in eine drei Kammern unterteilte Kapsel. Eine solche Dreikammer-Kapsel 1000 ist in dreidimensionaler Ansicht beispielhaft in Figur 2 (b) von außen gezeigt, wobei die Unterteilung in drei Kammern natürlich nicht sichtbar ist. Die Herstellung (d. h., beim Zusammensetzen) dieser Dreikammer-Kapsel 1000 erfolgt in naheliegender Weise in mehreren Schritten. Durch geeignete Zwischenschritte können die Kammern in naheliegender Weise dabei jeweils mit gewünschten Substanzen gefüllt werden.

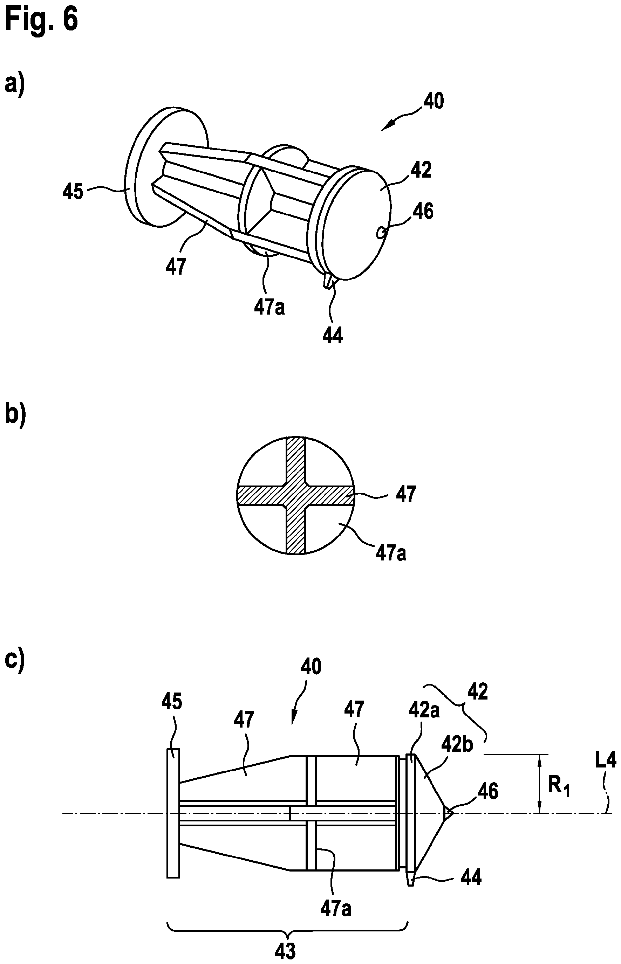

Beispielhaft soll nachfolgend der Kolben insbesondere anhand der Figur 6 beschrieben werden, der in der Ausführungsform des Dreikammer-Kapsel-Applikationssystems 1 von Fig. 1 verwendet werden kann. Der Kolben 42 ist im hinteren Kapselteil 30, und insbesondere im zweiten Bereich 32b der Innenoberfläche 32 des hinteren Kapselteils 30 verschiebbar. Der Kolben 42 kann einen Vollzylinder oder eine kreisförmige Scheibe 42a aufweisen, die im hinteren Kapselteil 30 quer zu dessen Längsachse L3 ausgerichtet ist. Der Radius des Vollzylinders oder der Scheibe 42a entspricht dabei vorzugsweise dem Radius R₁ des zweiten Innenseitenbereichs 32b der Innenoberfläche 32 des hinteren Kapselteils 30. Beispielsweise kann R₁ = 7,5 mm gewählt werden. Um das Schieben des Kolbens 42 im Kapselteil 30 erleichtern, kann dieser Radius alternativ auch etwas kleiner gewählt werden, d. h., anstelle von R₁ kann ein Radius R₁ - ΔR₁ mit ΔR₁ > 0 mm gewählt werden, wobei ΔR₁ wesentlich kleiner (also mindestens um einen Faktor 10 kleiner) ist als der Radius des im Wesentlichen zylindrischen zweiten Innenseitenbereichs 32b des hinteren Kapselteils 30. Das oben in Bezug auf ein erleichtertes Einstecken des mittleren Kapselteils 20 in den vorderen Kapselteil 10 Gesagte gilt in entsprechender Weise. Beispielsweise kann bei R₁ = 7,5 mm ein ΔR₂ = 0,1 mm gewählt werden, so dass sich bei dieser Ausführungsform für den Radius des Vollzylinders oder der Scheibe 42a folglich R₁ - ΔR₁ = 7,5 mm - 0,1 mm = 7,4 mm ergibt.

Auf derjenigen Seite, die in Längsrichtung L3 des hinteren Kapselteils 30 gesehen dem vorderen Ende 34 des hinteren Kapselteils 30 zugewandt ist, wenn der Kolben ins hintere Kapselteil 30 eingeführt wird oder ist, kann ein dornförmiger Vorsprung 46 (nachfolgend kurz "Dorn") angebracht sein. Der Dorn 46 erleichtert das Durchstoßen der Membranen 52, 62, wenn der Kolben 42 beim Applizieren oder Herstellen einer Substanz mit Hilfe des Dreikammer-Kapsel-Applikationssystems 1 gegen die entsprechende Membrane gedrückt wird. Mit Hilfe des Dorns 46 können die Membranen also jeweils leicht durchstoßen werden, womit insbesondere eine vollständige Öffnung zwischen den Kammern des aus dem Dreikammer-Kapsel-Applikationssystem 1 zusammengesetzten Dreikammer-Kapsel gewährleistet werden kann.

Auf derjenigen Seite, die in Längsrichtung L3 des hinteren Kapselteils 30 gesehen dem vorderen Ende 34 des hinteren Kapselteils 30 zugewandt ist, wenn der Kolben ins hintere Kapselteil 30 eingeführt wird oder ist, kann der Vollzylinder oder die Scheibe 42a einen konischen Aufsatz 42b haben, der sich in Richtung des vorderen Endes 34 des hinteren Kapselteils 30 verjüngt. Der konische Aufsatz 42b kann einstückig mit dem Vollzylinder oder der Scheibe 42a ausgebildet sein. Falls der Kolben 42 einen Dorn 46 aufweist, so ist dieser in diesem Fall vorzugsweise am Ende der Verjüngung des konischen Aufsatzes 42b angebracht.

Vorteilhaft weist dieser Vollzylinder oder diese Scheibe 42a des Kolbens 42 den gleichen Radius auf wie der zylindrische zweite Bereich 32b der Innenoberfläche 32 des hinteren Kapselteils 30, in der in den Figuren gezeigten Ausführungsform also den Radius R₁.

Vorzugsweise ist der Kolben 42 Teil eines Stempels 40, wobei der Stempel 40 weiterhin einen Griffel 43 aufweist. Der Griffel 43 kann einer Druckfläche 45 aufweisen, die ein manuelles und/oder maschinelles Einschieben des Stempels 40 in den hinteren Kapselteil 30 erleichtert. Der Griffel 43 kann weiterhin Verstrebungen 47 aufweisen, die die Druckfläche 45 mit dem Kolben 42 entlang einer Längsrichtung L4 des Stempels 40 verbinden. Die Verstrebungen 47 können ein kreuzförmiges Profil aufweisen, wie insbesondere in Fig. 6 (b) illustriert. Zwischen der Druckfläche 45 und dem Kolben 42 können die Verstrebungen 47 durch mindestens eine Stabilisierungsplatte 47a stabilisiert werden.

Zur der Herstellung oder Applikation einer Mischsubstanz mittels der aus dem Dreikammer-Kapsel-Applikationssystem 1 zusammengesetzten (und geeignet mit Substanzen befüllten) Dreikammer-Kapsel 1000 wird der Kolben 42 (oder in der gezeigten Ausführungsform der ganze Stempel 40 mittels des Griffels 43) nun entlang der Längsachse L der Dreikammer-Kapsel 1000 in Richtung des vorderen Endes 14 des vorderen Kapselteils 10 geschoben. Dabei durchstößt der Kolben 42 zunächst die im hinteren Kapselteil 30 angebrachte erste Membrane 52, so dass die Separation der ersten und zweiten Kammer aufgehoben wird und sich die Substanzen der ersten und zweiten Kammer vermischen (und gegebenenfalls auch chemisch miteinander reagieren) können. Wird der Kolben 42 weiter in Richtung des vorderen Endes 14 des vorderen Kapselteils 10 geschoben, so durchstößt er anschließend auch die zweite Membrane 62. Dadurch wird nun auch die Trennung der dritten Kammer von den (bereits miteinander verbundenen) ersten und zweiten Kammern beseitigt, so dass sich die in der dritten Kammer befindliche Substanz nun mit den (bereits miteinander vermischten und gegebenenfalls reagierten) ursprünglich in der ersten und dritten Kammer befindlichen Substanzen vermischt und gegebenenfalls chemisch reagiert.

Um jedoch ein schrittweises Durchmischen zu ermöglichen, d. h., erst ein Durchmischen der Substanzen der ersten und zweiten Kammer zu einer ersten Mischsubstanz, und anschließend dann ein Durchmischen der Substanz in der dritten Kammer mit der ersten Mischsubstanz, ist es vorteilhaft den Kolben 42 geeignet zu führen. Insbesondere sollen beim Einschieben Haltepunkte oder Stopppunkte definiert sein, bei denen die Einschiebebewegung des Kolbens 42 in die Kapsel in Längsrichtung (also entlang der Längsachse L) unterbrochen wird. Dies verhindert zudem eine möglicherweise zu schnell ausgeführte Bewegung. Zu diesem Zweck kann in Ausführungsformen des Dreikammer-Kapsel-Applikationssystems 1 auf den Innenoberflächen eines oder mehrerer Kapselteile jeweils eine Führungsnut vorgesehen sein, die eine durchgängige Vorwärtsbewegung des Kolbens 42 (also eine durchgängige Bewegung in Richtung des vorderen Endes 14 des vorderen Kapselteils 10) durch die Dreikammer-Kapsel 1000 (also das zusammengesetzte Dreikammer-Kapsel-Applikationssystem 1) an bestimmten Stellen stoppt und an diesen Stellen zunächst eine Drehbewegung oder sogar eine kombinierte Dreh- und Rückwärtsbewegung nötig macht, bevor der Kolben 42 weiter vorwärts, d. h., in Richtung des vorderen Endes 14 des vorderen Kapselteils 10, bewegt werden kann. Damit der Kolben 42 bei der Bewegung in einem Kapselteil durch die entsprechende Führungsnut gesteuert werden kann, weist der Kolben 42 in radialer Richtung eine Nase 44 auf, die in die Führungsnut eingreift, wenn sich der Kolben 42 in diesem Kapselteil bewegt wird.

In Ausführungsformen kann die Führungsnut eines Kapselteils beispielsweise die die Gestalt eines gestreckten Z aufweisen. Dies sei nachfolgend am Beispiel des in den Figuren 1, 5 (a) und (b) gezeigten hinteren Kapselteils 30 erläutert. Wie bereits oben beschrieben, kann der zweite Bereich 32b der Innenoberfläche 32 des hinteren Kapselteils 30 eine erste Führungsnut 90a aufweisen. Die erste Führungsnut 90a weist dabei drei aneinandergereihte Pfade 91a, 92a, 93a auf. Dabei bildet der Endpunkt 100a (nachfolgend "erster Stopppunkt 100a" genannt) des ersten Pfades 91a zugleich den Startpunkt des zweiten Pfades 92a, und der Endpunkt 110a (nachfolgend "erster Weiterführungspunkt 110a" genannt) des zweiten Pfades 92a bildet zugleich den Startpunkt 110a des dritten Pfades 93a. Die Pfade 91a, 92a, 93a können jeweils geradlinige Streckenabschnitte sein. Dabei sind der erste Pfad 91a und der dritte Pfad 93a parallel zur Längsachse L3 des hinteren Kapselteils 30 ausgerichtet, wobei der erste Pfad 91a vom hinteren Ende 36 des hinteren Kapselteils 30 zum ersten Stopppunkt 100a verläuft und der dritte Pfad 93a vom ersten Weiterführungspunkt 110a in Richtung des vorderen Endes 34 des ersten Kapselteils 30 bis zum Übergang des zweiten Innenseitenbereichs 32b zum ersten Innenseitenbereich 32a des hinteren Kapselteils 30 geführt wird.

Zudem stoßen der erste Pfad 91a und der zweite Pfad 91b im ersten Stopppunkt 100a vorteilhaft so zusammen, dass die Führungsnut 90a an der Stelle des ersten Stopppunkts 100a einen "Knick" aufweist (d. h., die Nase 44 des Kolbens 42 kann zwar kontinuierlich vom ersten Pfad 91a in den zweiten Pfad 92a geführt werden, jedoch ist mathematisch gesprochen die Kurve, der Führungsnut 90a folgt, an der Stelle des ersten Stopppunkts 100a nicht in klassischer Weise differenzierbar). Vorzugsweise stoßen der erste Pfad 91a und der zweite Pfad 92a an der Stelle des ersten Stopppunktes 100a in einem Winkel α₁ aufeinander, der spitzwinklig ist oder maximal 90° beträgt, beispielsweise gilt 20° ≤ α₁ ≤ 90°. Beispielsweise kann dieser Winkel 45°, 60°, 70°, 80° oder 90° betragen. In den Figuren beträgt der Winkel ca. 90°.

Entsprechend stoßen der zweite Pfad 92a und der dritte Pfad 93a im ersten Weiterführungspunkt 110a vorteilhaft so zusammen, dass die Führungsnut 90a an der Stelle des ersten Weiterführungspunkts 110a einen "Knick" aufweist (d. h., die Nase 44 des Kolbens 42 kann zwar kontinuierlich vom zweiten Pfad 92a in den dritten Pfad 93a geführt werden, jedoch ist mathematisch gesprochen die Kurve, der Führungsnut 90a folgt, an der Stelle des ersten Weiterführungspunkts 110a nicht in klassischer Weise differenzierbar). Vorzugsweise stoßen der zweite Pfad 92a und der dritte Pfad 93a an der Stelle des ersten Weiterführungspunkts 110a in einem Winkel β, aufeinander, der spitzwinklig ist oder maximal 90° beträgt, beispielsweise gilt 20° ≤ β₁ ≤ 90°. Beispielsweise kann dieser Winkel 45°, 60°, 70°, 80° oder 90° betragen. In den Figuren beträgt der Winkel ca. 90°.

Sei nun angenommen, der Kolben 42 befinde sich zunächst im zweiten Bereich 32b der Innenoberfläche 32 des hinteren Kapselteils 30, wobei sich die ferner die Nase 44 des Kolbens 42 im ersten Pfad 91a befinde. Wird der Kolben 42 nun nach vorne (d. h., in Richtung des vorderen Endes 34 des hinteren Kapselteils oder - beim zur Dreikammer-Kapsel 1000 zusammengesetzten Dreikammer-Kapsel-Applikationssystem 1 - gleichbedeutend in Richtung des vorderen Endes 14 des vorderen Kapselteils 10) gedrückt, so kann er sich zunächst nur bis zum ersten Stopppunkt 100a bewegen. Dies verhindert eine Weiterführung des Kolbens 42 in Richtung des vorderen Endes 34 des hinteren Kapselteils 30 und damit auch ein - beispielsweise versehentliches - Durchstoßen der ersten Membrane 52, wenn sich eine solche im hinteren Kapselteil 30 an der dazu vorgesehen Position 38 (wie oben beschrieben) befindet.

Damit der Kolben 42 anschließend weiter in Vorwärtsrichtung geführt werden kann, ist nun zunächst eine Drehbewegung des Kolbens erforderlich, wobei die Nase 44 des Kolbens 42 durch den zweiten Pfad 92a geführt wird. Stoßen der erste Pfad 91a und der zweite Pfad 92a spitzwinklig aufeinander, so ist sogar eine kombinierte Dreh- und Rückwärtsbewegung des Kolbens 42 notwendig, bevor der Kolben 42 anschließend weiter nach vorwärts geführt werden kann, d. h., es ist notwendig, den Kolben 42 zugleich um dessen Längsachse L4 (die mit der Längsachse L3 des hinteren Kapselteils 30 zusammenfällt) zu drehen und zugleich in Richtung des hinteren Endes 36 des hinteren Kapselteils 30 zu führen, damit die Nase 44 dem zweiten Pfad 92a folgen kann. Ist diese Bewegung soweit ausgeführt, dass die Nase 44 den ersten Weiterführungspunkt 110a, so kann anschließend die Vorwärtsbewegung des Kolbens 42 fortgesetzt werden, wobei dessen Nase 44 dann im dritten Pfad 93a geführt wird. Bei dieser weiteren Vorwärtsbewegung wird nun eine an der Position 38 im hinteren Kapselteil 30 befindliche erste Membrane 52 (siehe oben) vom Kolben 42 durchstoßen. Beim zur Dreikammer-Kapsel 1000 zusammengesetzten Dreikammer-Kapsel-Applikationssystem 1 entsteht dadurch eine Verbindung zwischen der ersten Kammer und der zweiten Kammer, so dass sich die darin jeweils befindlichen Substanzen nun zu einer ersten Mischsubstanz vermischen können (siehe oben).

Ähnliche Strukturen zur Führung des Kolbens 42 können im mittleren Kapselteil 20 und gegebenenfalls auch im vorderen Kapselteil 10 implementiert sein. Für das mittlere Kapselteil 20 ist dies beispielhaft insbesondere in Fig. 4 (c) illustriert. In die Innenoberfläche 22 des mittleren Kapselteils 20 ist eine zweite Führungsnut 90b implementiert, die sich als gestrecktes Z vom hinteren Ende 26 des mittleren Kapselteils 20 zum vorderen Ende 24 des mittleren Kapselteils erstreckt. Die zweite Führungsnut 90b ist dabei aus drei aneinanderstoßenden Pfaden 91b, 92b, 93b zusammengesetzt. Dabei erstreckt sich parallel zur Längsachse L2 des mittleren Kapselteils 20 ein erster Pfad 91b (des mittleren Kapselteils 20) vom hinteren Ende 26 des mittleren Kapselteils bis zu einem zweiten Stopppunkt 100b, in dem sich mit einem spitzen Winkel α₂ (in der Figur ca. 60°) relativ zum ersten Pfad 91b dann ein zweiter Pfad 92b anschließt, der bis zu einem zweiten Weiterführungspunkt 110b verläuft, von dem sich wiederum parallel zur Längsachse L2 des mittleren Kapselteils 20 ein dritter Pfad 93b bis zum vorderen Ende 24 des mittleren Kapselteils 20 erstreckt. Dabei treffen im zweiten Weiteführungspunkt 110b der zweite Pfad 92b und der dritte Pfad 93b in einem Winkel β₂ von wiederum ca. 60° aufeinander. Für die zweite Führungsnut 90b und deren Pfade 91b, 92b, 93b sowie die Winkel α₂ und β₂ gilt das oben in Bezug auf die erste Führungsnut 90a, deren Pfade 91a, 92a, 93a und die Winkel α₁ und β₁ zwischen den Pfaden der ersten Führungsnut 90a Gesagte in entsprechender Weise.

Die Führung eines Kolbens 42, der sich im mittleren Kapselteil 20 befindet und dessen Nase 44 mit dem ersten Pfad 91b der zweiten Führungsnut 90b in Eingriff ist, kann folglich eine Vorwärtsbewegung (d. h., eine Bewegung in Richtung des vorderen Endes 24 des mittleren Kapselteils 20) zunächst nur bis zum zweiten Stopppunkt 100b ausführen, wobei die Nase 44 im ersten Pfad 91b geführt wird. Dies verhindert eine unmittelbare Weiterführung des Kolbens 42 in Richtung des vorderen Endes 24 des mittleren Kapselteils 20. Bei der zusammengesetzten Kapsel 1000 verhindert dies zugleich auch ein - beispielsweise versehentliches - Durchstoßen der zweiten Membrane 62, wenn sich eine solche im vorderen Kapselteil 10 an der dazu vorgesehen Position 18 (wie oben beschrieben) befindet.

Um den Kolben 42 bis zum vorderen Ende 24 des mittleren Kapselteils 20 führen zu können, muss jedoch zunächst eine kombinierte Dreh- und Rückwärtsbewegung des Kolbens 42 ausgeführt werden, d. h., der Kolben 42 muss um seine (in dieser Situation mit der Längsachse L2 des mittleren Kapselteils zusammenfallenden) Längsachse L4 gedreht werden und zugleich etwas in Richtung des hinteren Endes 26 des mittleren Kapselteils 20 gezogen werden, so dass die Nase dem zweiten Pfad 92b bis zum zweiten Weiterführungspunkt 110b folgt. Von dort aus kann der Kolben 42 dann weiter vorwärts geschoben werden, wobei seine Nase 44 durch den dritten Pfad 93b geführt wird. In der zusammengesetzten Dreikammer-Kapsel 1000 wird nun bei dieser weiteren Vorwärtsbewegung eine an der Position 18 im hinteren Kapselteil 30 befindliche zweite Membrane 62 (siehe oben) vom Kolben 42 durchstoßen. Dadurch entsteht eine Verbindung zwischen der zweiten Kammer (die ja bereits mit der ersten Kammer in Verbindung steht) und der dritten Kammer, so dass sich die darin jeweils befindlichen Substanzen vermischen können (siehe oben).

Schließlich kann auch der vordere Kapselteil 10 eine analoge Struktur zur Führung des Kolbens 42 aufweisen, wie beispielhaft insbesondere durch Fig. 3 (c) illustriert. In den ersten Bereich 12a der Innenoberfläche 12 des vorderen Kapselteils 10 ist eine dritte Führungsnut 90c implementiert, die sich als gestrecktes Z vom hinteren Ende 16 des vorderen Kapselteils 10 zum vorderen Ende 14 des vorderen Kapselteils 10 erstreckt. Die dritte Führungsnut 90c ist dabei aus drei aneinanderstoßenden Pfaden 91c, 92c, 93c zusammengesetzt. Dabei erstreckt sich parallel zur Längsachse L1 des vorderen Kapselteils 10 ein erster Pfad 91c (des vorderen Kapselteils 10) von der Stufe oder Kante 12c auf der Innenoberfläche 12 des vorderen Kapselteils 10 bis zu einem dritten Stopppunkt 100c, in dem sich mit einem spitzen Winkel α₃ (in der Figur ca. 60°) relativ zum ersten Pfad 91c dann ein zweiter Pfad 92c anschließt, der bis zu einem dritten Weiterführungspunkt 110c verläuft, von dem sich wiederum parallel zur Längsachse L1 des vorderen Kapselteils 10 ein dritter Pfad 93c bis zum vorderen Ende 14 des vorderen Kapselteils 10 erstreckt. Dabei treffen im dritten Weiteführungspunkt 110c der zweite Pfad 92c und der dritte Pfad 93c in einem Winkel β₃ von wiederum ca. 60° aufeinander. Für die dritte Führungsnut 90c und deren Pfade 91c, 92c, 93c sowie die Winkel α₃ und β₃ gilt das oben in Bezug auf die erste Führungsnut 90a, deren Pfade 91a, 92a, 93a und die Winkel α₁ und β₁ zwischen den Pfaden der ersten Führungsnut 90a Gesagte in entsprechender Weise.

Die Führung eines Kolbens 42, der sich im vorderen Kapselteil 10 befindet und dessen Nase 44 mit dem ersten Pfad 91c der dritten Führungsnut 90c in Eingriff ist, kann folglich eine Vorwärtsbewegung (d. h., eine Bewegung in Richtung des vorderen Endes 14 des vorderen Kapselteils 10) zunächst nur bis zum dritten Stopppunkt 100c ausführen, wobei die Nase 44 im ersten Pfad 91c geführt wird. Dies verhindert eine unmittelbare Weiterführung des Kolbens 42 in Richtung des vorderen Endes 14 des mittleren Kapselteils 20 und damit auch ein - beispielsweise versehentliches - vorzeitiges Anstoßen / Anschlagen des Kolbens 42 an die (Innenseite) des vorderen Endes 14 des vorderen Kapselteils 10. Damit wird in der zusammengesetzten Dreikammer-Kapsel 1000 gewährleistet, dass Zeit zum Mischen der (aus der Vermischung der sich ursprünglich in der ersten und zweiten Kammer befindlichen hervorgegangenen) ersten Mischsubstanz mit der in der dritten Kammer gelagerten Substanz bleibt, bevor die endgültige Mischsubstanz mittels des Kolbens 42 durch die Mündung oder den Auslass 19 im vorderen Ende 14 des vorderen Kapselteils 10 gedrückt wird.

Die Wirkung der vorstehend beschriebenen Strukturen zur Führung des Kolbens 42 können grob wie folgt zusammengefasst werden: Im Inneren der zusammengesetzten Dreikammer-Kapsel 1000 wird durch die Führungsnuten 90a, 90b, 90c ein Gangsystem konstruiert, welches eine zu frühe Zerstörung der Membranen 52, 62 verhindert. An bestimmten Positionen dieses Gangsystems befinden sich Haltepunkte 100a, 100b oder ein Mischpunkt 100c (Stopppunkte). Der Kolben 42 lässt sich durch diese Stopppunkte nicht in einer durchgehenden Vorwärtsbewegung durch die Dreikammer-Kapsel 1000 schieben. Damit steht ausreichend Platz (und zudem auch Zeit) zum Mischen zur Verfügung. Der Kolben 42 wird während des Mischvorganges nach vorn gedrückt und dadurch fixiert. Dieser Vorgang kann bei geeigneten Ausführungsformen durch ein passendes Mischgerät (Kapselmischer) automatisiert ausgeführt werden. Um die Kapsel weiter auszudrücken, ist es insbesondere nötig, den Kolben 42 um einen vorgegebene Winkel zu rotieren. Dabei kann der Kolben 42 wird durch das Gangsystem leicht zurückgeschoben werden. Erst im Anschluss an diese Drehung lässt sich der Kolben 42 dann weiter nach vorne drücken. Da sich das Gangsystem über drei Bauteile (hinteres, mittleres und vorderes Kapselteil) erstrecken kann, können in Ausführungsformen diese einzelnen Bauteile gegen Drehung gesichert ineinandersteckbar sein.

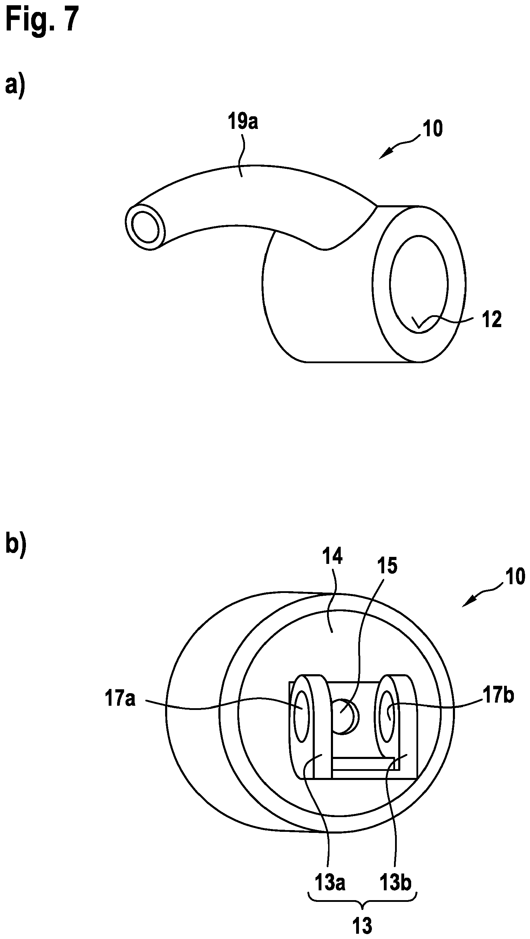

Bei den in den Figuren 1 bis 3 dargestellten Ausführungsformen weist das vordere Kapselteil 10 als Mündung oder Auslass 19 einen so genannten männlichen Luer-Konus / Luer-Aufsatz auf, der für eine Luer-Slip-Verbindung zur Aufnahme einer Kanüle (nicht gezeigt) geeignet ist, durch die sich die mit Hilfe der Dreikammer-Kapsel 1000 durchmischten Substanzen dann applizieren lassen. Der Luer-Konus / Luer-Aufsatz ermöglicht den Anschluss / die Verwendung von Kanülen mit diversen Innendurchmessern. Alternativ kann aber auch ein fest aufkonstruiertes Schwenkdüsenstück 19a genutzt werden, wie es in Fig. 7 (a) gezeigt ist. Das Schwenkdüsenstück 19a kann dabei, wie in Fig. 7 (a) illustriert, seitlich aus dem vorderen Kapselteil 10 herausgeführt, dessen vorderes Ende 14 ist in diesem Fall vollständig geschlossen.

Alternativ kann das Schwenkdüsenstück 19a aber auch am vorderen Ende 14 des vorderen Kapselteils 10 angebracht sein; eine solche Konstruktion ist beispielhaft in Fig. 7 (b) gezeigt. Auf dem vorderen Ende 14 des vorderen Kapselteils 10 ist dazu eine Aufnahmeeinrichtung 13 montiert. Die Aufnahmeeinrichtung 13 kann beispielsweise einen ersten Führungsaufsatz 13a und einen zweiten Führungsaufsatz 13b aufweisen, wobei sich im ersten Führungsaufsatz 13a eine erste Führungsöffnung 17a und im zweiten Führungsaufsatz 13b eine zweite Führungsöffnung 17b befindet, so dass das Schwenkdüsenstück 19a seitlich (also im Wesentlichen quer zur Längsachse L1 des vorderen Kapselteils 10) durch beide Führungsöffnungen 17a, 17b in die Aufnahmeeinrichtung 13 eingeführt und von dieser schwenkbar (da drehbar in den Führungsöffnungen 17a, 17b gelagert) gehalten werden kann. Dabei weist das vordere Ende 14 des vorderen Kapselteils 10 eine Durchgangsöffnung 15 für das Fluid (d. h., die zu applizierende Mischsubstanz) auf.

Entsprechend weist auch das Schwenkdüsenstück 19a eine Durchgangsöffnung (nicht gezeigt) auf. Wie vorstehend beschrieben, ist die Aufnahmeeinrichtung 13 so konstruiert, dass durch Rotation des Schwenkdüsenstücks 19a dann ein geöffneter Zustand sowie ein geschlossener Zustand der Kapsel 1000 herbeigeführt werden kann, je nach relativer Lage der Öffnungen im vorderer Kapselteil 10 und im Schwenkdüsenstück 19a zueinander. In anderen Worten: Wenn sich das Schwenkdüsenstück 19a in einer solchen Position befindet, dass die Öffnung des Schwenkdüsenstücks 19a direkt an der Öffnung 15 im vorderen Ende 14 des vorderen Kapselteils 10 anliegt, so kann Fluid durch diese beiden Öffnungen aus dem Inneren der Kapsel 1000 in das Schwenkdüsenstück 19a eintreten und aus letzterer dann appliziert werden (geöffneter Zustand der Kapsel 1000). Wenn sich hingegen das Schwenkdüsenstück 19a in einer solchen Position befindet, dass die Öffnung des Schwenkdüsenstücks 19a nicht an der Öffnung 15 im vorderen Ende 14 des vorderen Kapselteils 10 anliegt, so wird verhindert, dass Fluid aus dem Inneren der Kapsel 1000 in das Schwenkdüsenstück 19a gelangen kann (geschlossener Zustand der Kapsel 1000). Über eine konkave Oberflächenausprägung am vorderen Kapselteil 10 ist ein passiges Gleiten des Schwenkdüsenstücks 19a über das vordere Kapselteil 10 möglich.

Die vorstehend anhand der Figuren beschriebenen Ausführungsformen des Dreikammer-Kapsel-Applikationssystems 1 lassen sich, wie beschrieben, zu Dreikammer-Kapseln 1000 zusammensetzen. Diese Dreikammer-Kapseln können zur manuellen Herstellung und/oder Applikation von dreikomponentigen Mischsubstanzen verwendet werden. Jedoch lassen sich diese Dreikammer-Kapseln ebenso von marktüblichen Mischautomaten (Kapselmischern) bedienen; gegenüber der manuellen Anmischung führt dies insbesondere zu konstanteren, homogeneren Mischergebnissen, da im Gegensatz zur Handanmischung die Kapselmischer stets bei konstanter Mischleistung und Mischfrequenz arbeiten, und ferner die durch die Kapseln - und insbesondere durch die durch die erfindungsgemäße Dreikammer-Kapsel - bereitgestellten Materialien stets von gleicher Konsistenz, Viskosität und Menge sind. In Figur 8 ist daher exemplarisch eine Auswahl verschiedener Kapselmischer gezeigt. Fig. 8 (a) zeigt den GIC Mixer der Voco GmbH, Fig. 8 (b) den CapMix der 3M Deutschland GmbH und Fig. 8 (c) den Capsule Mixer CM-II von der Firma GC Germany GmbH.

### Liste der Bezugszeichen

- 1: Dreikammer-Kapsel-Applikationssystem

- 10: vorderer Kapselteil
- 11: Streben zur Stabilisierung
- 12: Innenoberfläche des vorderen Kapselteils
- 12a: erster / vorderer Bereich der Innoberfläche des vorderen Kapselteils
- 12b: zweiter / hinterer Bereich der Innoberfläche des vorderen Kapselteils
- 12c: Kante oder Stufe der Innoberfläche des vorderen Kapselteils
- 13: Aufnahmeeinrichtung
- 13a, b: Führungsaufsätze
- 14: vorderes Ende des vorderen Kapselteils
- 15: Öffnung in vorderem Ende des vorderen Kapselteils
- 16: hinteres Ende des vorderen Kapselteils
- 17a, b: Führungsöffnungen
- 18: Position zur Fixierung eines ersten O-Rings
- 19: Mündung / Auslass
- 19a: Schwenkdüsenstück

- 20: mittlerer Kapselteil
- 22: Innenoberfläche des mittleren Kapselteils
- 23: Außenoberfläche des mittleren Kapselteils
- 23a, b: abgeflachte Bereiche der Außenoberfläche des mittleren Kapselteils
- 24: vorderes Ende des mittleren Kapselteils
- 26: hinteres Ende des mittleren Kapselteils

- 30: hinterer Kapselteil
- 31: Streben zur Stabilisierung
- 32: Innenoberfläche des hinteren Kapselteils
- 32a: erster / vorderer Bereich der Innoberfläche des hinteren Kapselteils
- 32b: zweiter / hinterer Bereich der Innoberfläche des hinteren Kapselteils
- 32c: Kante oder Stufe der Innoberfläche des hinteren Kapselteils
- 34: vorderes Ende des hinteren Kapselteils
- 36: hinteres Ende des hinteren Kapselteils
- 38: Position zur Fixierung eines zweiten O-Rings

- 40: Stempel
- 42: Kolben
- 42a: Vollzylinder oder Scheibe
- 42b: konischer Aufsatz
- 43: Griffel
- 44: Nase
- 45: Druckfläche
- 46: Dorn
- 47: Verstrebungen
- 47a: Stabilisierungsplatte

- 50: erster O-Ring
- 52: erste Membrane

- 60: zweiter O-Ring
- 62: zweite Membrane

- 70a, b, c, d: Vorsprünge
- 74: Vorsprung

- 80a, b, c, d: Klammern
- 90a: erste Führungsnut
- 90b: zweite Führungsnut
- 90c: dritte Führungsnut
- 91a: erster Pfad der ersten Führungsnut
- 91b: erster Pfad der zweiten Führungsnut
- 91c: erster Pfad der dritten Führungsnut
- 92a: zweiter Pfad der ersten Führungsnut
- 92b: zweiter Pfad der zweiten Führungsnut
- 92c: zweiter Pfad der dritten Führungsnut
- 93a: dritter Pfad der ersten Führungsnut
- 93b: dritter Pfad der zweiten Führungsnut
- 93c: dritter Pfad der dritten Führungsnut

- 100a: erster Stopppunkt
- 100b: zweiter Stopppunkt
- 100c: dritter Stopppunkt

- 110a: erster Weiterführungspunkt
- 110b: zweiter Weiterführungspunkt
- 110c: dritter Weiterführungspunkt

- 1000: Dreikammer-Kapsel

- L: Längsachse einer aus dem Dreikammer-Kapsel-Applikationssystem zusammengesetzten Dreikammer-Kapsel
- L1: Längsachse des vorderen Kapselteils
- L2: Längsachse des mittleren Kapselteils
- L3: Längsachse des hinteren Kapselteils
- R₁: erster Radius
- R₂: zweiter Radius
- R₃: dritter Radius

## Patentansprüche

1. Dreikammer-Kapsel-Applikationssystem (1) zur Lagerung, Mischung und Ausbringung reaktiver Substanzen, aufweisend:
einen vorderen Kapselteil (10), der als Hohlkörper mit einem geschlossenen oder im Wesentlichen geschlossenen vorderen Ende (14) und einem offenen hinteren Ende (16) ausgestaltet ist;
einen hinteren Kapselteil (30), der als Hohlkörper mit einem offenen vorderen Ende (34) und einem offenen hinteren Ende (36) ausgestaltet ist;
einen mittleren Kapselteil (20), der als Hohlkörper mit einem offenen vorderen Ende (24) und einem offenen hinteren Ende (26) ausgestaltet ist;
einen Kolben (42);
eine erste Membrane (52), die im Wesentlichen quer zur Längsrichtung (L3) des hinteren Kapselteils (30) im hinteren Kapselteil (30) an einer vorgesehenen Position (38) fixierbar ist;
eine zweite Membrane (62), die im Wesentlichen quer zur Längsrichtung (L1) des vorderen Kapselteils (10) im vorderen Kapselteil (10) an einer vorgesehenen Position (18) fixierbar ist.

2. Dreikammer-Kapsel-Applikationssystem (1) nach Anspruch 1,
wobei der mittlere Kapselteil (20) mit seinem vorderen Ende (24) in das hintere Ende (16) des vorderen Kapselteils (10) bis zu der Position (18) einschiebbar ist, an welcher die zweite Membrane (62) fixierbar ist, und mit seinem hinteren Ende (26) in des vordere Ende (34) des hinteren Kapselteils (30) bis zu der Position (38) einschiebbar ist, an welcher die erste Membrane (52) fixierbar ist;
wobei das hintere Ende des (16) vorderen Kapselteils (10) mit dem vorderen Ende (34) des hinteren Kapselteils (30) verbindbar ist, während der mittlere Kapselteil (20) mit seinem vorderen Ende (24) in das hintere Ende (16) des vorderen Kapselteils (10) eingeschoben und mit seinem hinteren Ende (26) in den vordere Ende (34) des hinteren Kapselteils (30) eingeschoben ist;
wobei der Kolben (42) in das hintere Ende (36) des hinteren Kapselteils (30) einschiebbar ist und, wenn das mittlere Kapselteil (20) mit seinem hinteren Ende (26) in das vordere Ende (34) des hinteren Kapselteils (30) eingeschoben ist, durch das hintere Kapselteil (30) hindurch in das mittlere Kapselteil (20) einschiebbar ist.

3. Dreikammer-Kapsel-Applikationssystem (1) nach Anspruch 1 oder 2,
wobei der vordere Kapselteil (10) eine im Wesentlichen rotationssymmetrische Innenoberfläche (12) aufweist;
wobei der hintere Kapselteil (30) eine im Wesentlichen rotationssymmetrische Innoberfläche (32) aufweist;
wobei der Hohlkörper des mittleren Kapselteils (20) im Wesentlichen ein beidseitig offener Hohlzylinder ist; und
wobei der Kolben (42) im Wesentlichen rotationssymmetrisch ausgestaltet ist.

4. Dreikammer-Kapsel-Applikationssystem (1) nach Anspruch 3, wobei der Kolben (42) eine radial zu seiner Symmetrieachse (L4) ausragende Nase (44) aufweist.

5. Dreikammer-Kapsel-Applikationssystem (1) nach Anspruch 4, wobei die Innenoberfläche (32) des hinteren Kapselteils (30) eine erste Führungsnut (90a) zum Führen der Nase (44) aufweist, wobei die erste Führungsnut (90a) so ausgestaltet ist, dass beim Bewegen des Kolbens (42) im hinteren Kapselteil (30) eine durchgängige Schiebbewegung des Kolbens (30) vom hinteren Ende (36) des hinteren Kapselteils (30) in Richtung des vorderen Endes (34) des hinteren Kapselteils (30) ohne eine Drehbewegung des Kolbens (42) um dessen Längsachse (L4) nur bis zu einem ersten Stopppunkt (100a) möglich ist, wobei der erste Stopppunkt (100a) so platziert ist, dass der bis zum ersten Stopppunkt (100a) geschobene Kolben (42) die erste Membrane (52) nicht berührt, wenn die erste Membrane (52) im hinteren Kapselteil (30) fixiert ist.

6. Dreikammer-Kapsel-Applikationssystem (1) nach Anspruch 5, wobei die erste Führungsnut (90a) ferner so ausgestaltet ist, dass aus der Position des ersten Stopppunkts (100a) heraus eine weitere Schiebbewegung des Kolbens (42) in Richtung des vorderen Endes (34) des hinteren Kapselteils (30) erst nach einer Drehbewegung des Kolbens (42) oder einer kombinierten Dreh- und Schiebbewegung des Kolbens (42) in Richtung des hinteren Endes (36) des hinteren Kapselteils (30) möglich wird.

7. Dreikammer-Kapsel-Applikationssystem (1) nach Anspruch 5 oder 6, wobei die Innenoberfläche (22) des mittleren Kapselteils (20) eine zweite Führungsnut (90b) zum Führen der Nase (44) aufweist, wobei die zweite Führungsnut (90b) so ausgestaltet ist, dass beim Bewegen des Kolbens (42) im mittleren Kapselteil (20) eine durchgängige Schiebbewegung des Kolbens (42) vom hinteren Ende (26) des mittleren Kapselteils (20) in Richtung des vorderen Endes (24) des mittleren Kapselteils (20) ohne eine Drehbewegung des Kolbens (42) um dessen Längsachse (L4) nur bis zu einem zweiten Stopppunkt (100b) möglich ist, wobei der zweite Stopppunkt (100b) so platziert ist, dass der bis zum zweiten Stopppunkt (100b) geschobene Kolben (42) die zweite Membrane (62) nicht berührt, wenn das mittlere Kapselteil (20) in das vordere Kapselteil (10) eingeschoben ist und die zweite Membrane (62) im vorderen Kapselteil (10) fixiert ist.

8. Dreikammer-Kapsel-Applikationssystem (1) nach Anspruch 7, wobei die zweite Führungsnut (90b) ferner so ausgestaltet ist, dass aus der Position des zweiten Stopppunkts (100b) heraus eine weitere Schiebbewegung des Kolbens (42) in Richtung des vorderen Endes (24) des mittleren Kapselteils (20) erst nach einer Drehbewegung des Kolbens (42) oder einer kombinierten Dreh- und Schiebbewegung des Kolbens (42) in Richtung des hinteren Endes (26) des mittleren Kapselteils (20) möglich wird.

9. Dreikammer-Kapsel-Applikationssystem (1) nach Anspruch 7 oder 8, wobei die Innenoberfläche (12) des vorderen Kapselteils (10) eine dritte Führungsnut (90c) zum Führen der Nase (44) aufweist; und
wobei vorzugsweise, wenn das mittlere Kapselteil (20) mit seinem vorderen Ende (24) in des hintere Ende (16) des vorderen Kapselteils (10) bis zu der Position (18) eingeschoben ist, an welcher die zweite Membrane (62) fixierbar ist, die zweite Führungsnut (90b) des mittleren Kapselteils formschlüssig an die dritte Führungsnut (90c) des vorderen Kapselteils (10) anschließt.

10. Dreikammer-Kapsel-Applikationssystem (1) nach einem der Ansprüche 1 bis 9, wobei das vordere Ende (14) des vorderen Kapselteils (10) eine Mündung oder einen Auslass (19) zum Durchlassen einer flüssigen oder viskosen Substanz durch das vordere Ende (14) des vorderen Kapselteils (10) aufweist,
wobei vorzugsweise die Mündung oder der Auslass (19) als männlicher Luer-Konus oder als Schwenkdüsenstück ausgestaltet ist.

11. Dreikammer-Kapsel-Applikationssystem (1) nach einem der Ansprüche 1 bis 10, wobei der Kolben (42) einen Dorn (46) zum Durchstoßen der ersten Membrane (52) und/oder zweiten Membrane (62) aufweist.

12. Dreikammer-Kapsel-Applikationssystem (1) nach einem der vorangehenden Ansprüche, wobei:
- der mittlere Kapselteil (20) mit seinem vorderen Ende (24) in das hintere Ende (16) des vorderen Kapselteils (10) bis zu der Position (18) eingeschoben ist, die für die Fixierung der zweiten Membrane (62) vorgesehen ist;
- der mittlere Kapselteil (20) mit seinem hinteren Ende (26) in des vordere Ende (34) des hinteren Kapselteils (30) bis zu der Position (38) eingeschoben ist, die für die Fixierung der ersten Membrane (52) vorgesehen ist;
- das hintere Ende (16) des vorderen Kapselteils (10) mit dem vorderen Ende (34) des hinteren Kapselteils (30) verbunden ist;
- der Kolben (42) in das hintere Ende (36) des hinteren Kapselteils (30) eingeschoben ist und sich das dem vorderen Ende (34) des hinteren Kapselteils (30) zugewandte Ende des Kolbens (42) zwischen dem ersten Stopppunkt (100a) und dem hinteren Ende (36) des hinteren Kapselteils (30) befindet.

13. Dreikammer-Kapsel (1000) zusammengesetzt aus dem Dreikammer-Kapsel-Applikationssystem (1) nach Anspruch 12, wobei
- die erste Membrane (52) im hinteren Kapselteil (30) fixiert ist;
- die zweite Membrane (62) im vorderen Kapselteil (10) fixiert ist;
und sich ferner:
- eine erste medizinisch wirksame Substanz im Bereich zwischen dem Kolben (42) und der ersten Membrane (52) befindet;
- eine zweite medizinisch wirksame Substanz im Bereich zwischen der ersten Membrane (52) und der zweiten Membrane (62) befindet; und
- eine dritte medizinisch wirksame Substanz im Bereich zwischen der zweiten Membrane (62) und dem im Wesentlichen geschlossenen vorderen Ende (14) des vorderen Kapselteils (10) befindet.

14. Verfahren zum Herstellen einer Dreikammer-Kapsel (1000) nach Anspruch 13 mit dem Dreikammer-Kapsel-Applikationssystem (1) nach einem der Ansprüche 1 bis 12, mit den Schritten:
i) Einschieben des Kolbens (42) in das hintere Ende (36) des hinteren Kapselteils (30), so dass sich das dem vorderen Ende (34) des hinteren Kapselteils (30) zugewandte Ende des Kolbens (42) zwischen dem ersten Stopppunkt (100a) und dem hinteren Ende (36) des hinteren Kapselteils (30) befindet;
j) Befüllen des hinteren Kapselteils (30) mit einer ersten medizinisch wirksamen Substanz im Bereich zwischen dem Kolben (42) und der Position (38), die zum Fixieren der ersten Membrane (52) vorgesehen ist;
k) Fixieren der ersten Membrane (52) an der dazu vorgesehenen Position (38) im hinteren Kapselteil (30);
l) Einschieben des mittleren Kapselteils (20) mit seinem hinteren Ende (26) in des vordere Ende (34) des hinteren Kapselteils (30) bis zu der Position (38) der ersten Membrane (52);
m) Befüllen des mittleren Kapselteils (20) mit einer zweiten medizinisch wirksamen Substanz;
n) Befüllen des vorderen Kapselteils (10) mit einer dritten medizinisch wirksamen Substanz im Bereich zwischen dem im Wesentlichen geschlossenen vorderen Ende (14) des vorderen Kapselteils (10) und der Position (18), die zum Fixieren der zweiten Membrane (62) vorgesehen ist;
o) Fixieren der zweiten Membrane (62) an der dazu vorgesehenen Position (18) im vorderen Kapselteil (10);
p) Einschieben des mittleren Kapselteils (20) mit seinem vorderen Ende (26) in das hintere Ende (16) des vorderen Kapselteils (10) bis zu der Position (18) der zweiten Membrane (62).

15. Nicht-therapeutisches Verfahren zum Herstellen einer medizinisch wirksamen Mischsubstanz mit einer Dreikammer-Kapsel (1000) nach Anspruch 13 mit den Schritten
F) Schieben des Kolbens (42) in Richtung des vorderen Endes (34) des hinteren Kapselteils (30) bis zum ersten Stopppunkt (100a);
G) Drehen des Kolbens (42) um seine Längsachse (L4) um einen ersten vordefinierten Winkel;
H) Schieben des Kolbens (42) in Richtung des vorderen Endes (24) des mittleren Kapselteils (20) bis zum zweiten Stopppunkt (100b);
I) Drehen des Kolbens (42) um seine Längsachse (L4) um einen zweiten vordefinierten Winkel;
J) Schieben des Kolbens (42) in Richtung des vorderen Endes (14) des vorderen Kapselteils (10) bis zum im Wesentlichen geschlossenen vorderen Ende (14) des vorderen Kapselteils (10).

## Claims

1. A three-chamber capsule application system (1) for storing, mixing and dispensing reactive substances, comprising:
a front capsule part (10) configured as a hollow body with a closed or substantially closed front end (14) and an open rear end (16);
a rear capsule part (30) configured as a hollow body with an open front end (34) and an open rear end (36);
a middle capsule part (20) configured as a hollow body with an open front end (24) and an open rear end (26);
a piston (42);
a first membrane (52) able to be fixed in an intended position (38) substantially perpendicular to the longitudinal direction (L3) of the rear capsule part (30) in the rear capsule part (30);
a second membrane (62) able to be fixed in an intended position (18) substantially perpendicular to the longitudinal direction (L1) of the front capsule part (10) in the front capsule part (10).

2. The three-chamber capsule application system (1) according to Claim 1,
wherein the middle capsule part (20) can be inserted with its front end (24) into the rear end (16) of the front capsule part (10) up to the position (18) in which the second membrane (62) can be fixed, and can be inserted with its rear end (26) into the front end (34) of the rear capsule part (30) up to the position (38) in which the first membrane (52) can be fixed;
wherein the rear end (16) of the front capsule part (10) can be connected to the front end (34) of the rear capsule part (30), while the middle capsule part (20) is inserted with its front end (24) into the rear end (16) of the front capsule part (10) and is inserted with its rear end (26) into the front end (34) of the rear capsule part (30);
wherein the piston (42) can be inserted into the rear end (36) of the rear capsule part (30) and, when the middle capsule part (20) is inserted with its rear end (26) into the front end (34) of the rear capsule part (30), can be inserted through the rear capsule part (30) into the middle capsule part (20).

3. The three-chamber capsule application system (1) according to Claim 1 or 2,
wherein the front capsule part (10) has an substantially rotationally symmetrical inner surface (12);
wherein the rear capsule part (30) has an substantially rotationally symmetrical inner surface (32);
wherein the hollow body of the middle capsule part (20) is substantially a hollow cylinder open on both sides; and
wherein the piston (42) is configured to be substantially rotationally symmetrical.

4. The three-chamber capsule application system (1) according to Claim 3, wherein the piston (42) has a nose (44) projecting radially from its axis of symmetry (L4).

5. The three-chamber capsule application system (1) according to Claim 4, wherein the inner surface (32) of the rear capsule part (30) has a first guiding groove (90a) for guiding the nose (44), wherein the first guiding groove (90a) is configured such that, when the piston (42) is moved in the rear capsule part (30), a continuous sliding movement of the piston (30) from the rear end (36) of the rear capsule part (30) in the direction of the front end (34) of the rear capsule part (30) is only possible up to a first stop point (100a) without a rotational movement of the piston (42) about its longitudinal axis (L4), wherein the first stop point (100a) is positioned such that the piston (42) pushed up to the first stop point (100a) does not contact the first membrane (52) when the first membrane (52) is fixed in the rear capsule part (30).

6. The three-chamber capsule application system (1) according to Claim 5, wherein the first guiding groove (90a) is further configured such that a further sliding movement of the piston (42) out of the position of the first stop point (100a) in the direction of the front end (34) of the rear capsule part (30) is only possible after a rotational movement of the piston (42) or a combined rotational and sliding movement of the piston (42) in the direction of the rear end (36) of the rear capsule part (30).

7. The three-chamber capsule application system (1) according to Claim 5 or 6, wherein the inner surface (22) of the middle capsule part (20) has a second guiding groove (90b) for guiding the nose (44), wherein the second guiding groove (90b) is configured such that on moving the piston (42) in the middle capsule part (20) a continuous sliding movement of the piston (42) from the rear end (26) of the middle capsule part (20) in the direction of the front end (24) of the middle capsule part (20) is only possible up to a second stop point (100b) without a rotational movement of the piston (42) about its longitudinal axis (L4), wherein the second stop point (100b) is positioned such that the piston (42) pushed up to the second stop point (100b) does not contact the second membrane (62), when the middle capsule part (20) is pushed into the front capsule part (10) and the second membrane (62) is fixed in the front capsule part (10).

8. The three-chamber capsule application system (1) according to Claim 7, wherein the second guiding groove (90b) is also configured such that from the position of the second stop point (100b) a further sliding movement of the piston (42) in the direction of the front end (24) of the middle capsule part (20) is only possible after a rotational movement of the piston (42) or a combined rotational and sliding movement of the piston (42) in the direction of the rear end (26) of the middle capsule part (20).

9. The three-chamber capsule application system (1) according to Claim 7 or 8, wherein the inner surface (12) of the front capsule part (10) has a third guiding groove (90c) for guiding the nose (44); and
wherein preferably, if the middle capsule part (20) is pushed with its front end (24) into the rear end (16) of the front capsule part (10) up to the position (18) in which the second membrane (62) can be fixed, the second guiding groove (90b) of the middle capsule part positively connects with the third guiding groove (90c) of the front capsule part (10).

10. The three-chamber capsule application system (1) according to any one of Claims 1 to 9, wherein the front end (14) of the front capsule part (10) has an opening or an outlet (19) for the allowing a liquid or viscous substance to pass through the front end (14) of the front capsule part (10),
wherein preferably, the opening or the outlet (19) is configured as a male Luer cone or as a swivel nozzle piece.

11. The three-chamber capsule application system (1) according to any one of Claims 1 to 10, wherein the piston (42) has a mandrel (46) for piercing the first membrane (52) and/or second membrane (62).

12. The three-chamber capsule application system (1) according to any one of the preceding claims, wherein:
- the middle capsule part (20) is inserted with its front end (24) into the rear end (16) of the front capsule part (10) up to the position (18) which is provided for fixing the second membrane (62);
- the middle capsule part (20) is inserted with its rear end (26) into the front end (34) of the rear capsule part (30) up to the position (38) provided for fixing the first membrane (52);
- the rear end (16) of the front capsule part (10) is connected to the front end (34) of the rear capsule part (30);
- the piston (42) is inserted into the rear end (36) of the rear capsule part (30) and the end of the piston (42) facing the front end (34) of the rear capsule part (30) is located between the first stop point (100a) and the rear end (36) of the rear capsule part (30).

13. The three-chamber capsule (1000) composed of the three-chamber capsule application system (1) according to Claim 12, wherein
- the first membrane (52) is fixed in the rear capsule part (30);
- the second membrane (62) is fixed in the front capsule part (10);
and furthermore:
- a first medically active substance is located in the region between the piston (42) and the first membrane (52);
- a second medically active substance is located in the region between the first membrane (52) and the second membrane (62); and
- a third medically active substance is located in the region between the second membrane (62) and the substantially closed front end (14) of the front capsule part (10).

14. A method for producing a three-chamber capsule (1000) according to Claim 13 comprising the three-chamber capsule application system (1) according to any one of Claims 1 to 12 comprising the steps:
i) inserting the piston (42) into the rear end (36) of the rear capsule part (30), so that the end of the piston (42) facing the front end (34) of the rear capsule part (30) is located between the first stop point (100a) and the rear end (36) of the rear capsule part (30);
j) filling the rear capsule part (30) with a first medically active substance in the region between the piston (42) and the position (38) provided for fixing the first membrane (52);
k) fixing the first membrane (52) in the intended position (38) in the rear capsule part (30);
l) inserting the middle capsule part (20) with its rear end (26) into the front end (34) of the rear capsule part (30) up to the position (38) of the first membrane (52);
m) filling the middle capsule part (20) with a second medically active substance;
n) filling the front capsule part (10) with a third medically active substance in the region between the substantially closed front end (14) of the front capsule part (10) and the position (18) provided for fixing the second membrane (62);
o) fixing the second membrane (62) in the intended position (18) in the front capsule part (10);
p) inserting the middle capsule part (20) with its front end (26) into the rear end (16) of the front capsule part (10) up to the position (18) of the second membrane (62).

15. A non-therapeutic method for producing a medically active mixed substance with a three-chamber capsule (1000) according to Claim 13, comprising the steps:
F) pushing the piston (42) in the direction of the front end (34) of the rear capsule part (30) up to the first stop point (100a);
G) rotating the piston (42) about its longitudinal axis (L4) about a first predefined angle;
H) pushing the piston (42) in the direction of the front end (24) of the middle capsule part (20) up to the second stop point (100b);
I) rotating the piston (42) about its longitudinal axis (L4) about a second predefined angle;
J) pushing the piston (42) in the direction of the front end (14) of the front capsule part (10) up to the substantially closed front end (14) of the front capsule part (10).

## Revendications

1. Système d'application de capsule à trois chambres (1) pour le stockage, le mélange et l'administration de substances réactives, comprenant :
une partie de capsule avant (10), réalisée comme corps creux avec une extrémité avant fermée ou sensiblement fermée (14) et une extrémité arrière ouverte (16) ;
une partie de capsule arrière (30), réalisée comme corps creux avec une extrémité avant ouverte (34) et une extrémité arrière ouverte (36) ;
une partie de capsule centrale (20), réalisée comme corps creux avec une extrémité avant ouverte (24) et une extrémité arrière ouverte (26) ;
un piston (42) ;
une première membrane (52), pouvant être fixée sensiblement perpendiculairement à la direction longitudinale (L3) de la partie de capsule arrière (30) à un emplacement prévu (38) dans la partie de capsule arrière (30) ;
une deuxième membrane (62), pouvant être fixée sensiblement perpendiculairement à la direction longitudinale (L1) de la partie de capsule avant (10) à un emplacement prévu (18) dans la partie de capsule avant (10).

2. Système d'application de capsule à trois chambres (1) selon la revendication 1,
où la partie de capsule centrale (20) est insérable par son extrémité avant (24) dans l'extrémité arrière (16) de la partie de capsule avant (10) jusqu'à l'emplacement (18) où la deuxième membrane (62) peut être fixée, et par son extrémité arrière (26) dans l'extrémité avant (34) de la partie de capsule arrière (30) jusqu'à l'emplacement (38) où la première membrane (52) peut être fixée ;
où l'extrémité arrière (16) de la partie de capsule avant (10) est raccordable à l'extrémité avant (34) de la partie de capsule arrière (30), pendant que la partie de capsule centrale (20) est insérée par son extrémité avant (24) dans l'extrémité arrière (16) de la partie de capsule avant (10) et par son extrémité arrière (26) dans l'extrémité avant (34) de la partie de capsule arrière (30) ;
où le piston (42) est insérable dans l'extrémité arrière (36) de la partie de capsule arrière (30) et est insérable dans la partie de capsule centrale (20) au travers de la partie de capsule arrière (30) lorsque la partie de capsule centrale (20) est insérée par son extrémité arrière (26) dans l'extrémité avant (34) de la partie de capsule arrière (30).

3. Système d'application de capsule à trois chambres (1) selon la revendication 1 ou la revendication 2,
où la partie de capsule avant (10) présente une surface intérieure (12) sensiblement rotosymétrique ;
où la partie de capsule arrière (30 présente une surface intérieure (32) sensiblement rotosymétrique ;
où le corps creux de la partie de capsule centrale (20) est sensiblement un cylindre creux ouvert sur ses deux côtés ; et
où le piston (42) est réalisé sensiblement rotosymétrique.

4. Système d'application de capsule à trois chambres (1) selon la revendication 3, où le piston (42) présente un ergot (44) en saillie radiale vers son axe de symétrie (L4).

5. Système d'application de capsule à trois chambres (1) selon la revendication 4, où la surface intérieure (32) de la partie de capsule arrière (30) présente une première rainure de guidage (90a) pour le guidage de l'ergot (44), ladite première rainure de guidage (90a) étant réalisée de sorte qu'en cas de déplacement du piston (42) dans la partie de capsule arrière (30) un coulissement continu du piston (30) de l'extrémité arrière (36) de la partie de capsule arrière (30) vers l'extrémité avant (34) de la partie de capsule arrière (30) n'est possible sans rotation du piston (42) autour de son axe longitudinal (L4) que jusqu'à un premier point d'arrêt (100a), ledit premier point d'arrêt (100a) étant placé de telle manière que le piston (42) coulissé jusqu'au premier point d'arrêt (100a) n'entre pas en contact avec la première membrane (52) lorsque la première membrane (52) est fixée dans la partie de capsule arrière (30).

6. Système d'application de capsule à trois chambres (1) selon la revendication 5, où la première rainure de guidage (90a) est en outre réalisée de sorte qu'à partir de l'emplacement du premier point d'arrêt (100a), un coulissement prolongé du piston (42) vers l'extrémité avant (34) de la partie de capsule arrière (30) n'est possible qu'après rotation du piston (42) ou rotation et coulissement combinés du piston (42) vers l'extrémité arrière (36) de la partie de capsule arrière (30).

7. Système d'application de capsule à trois chambres (1) selon la revendication 5 ou la revendication 6, où la surface intérieure (22) de la partie de capsule centrale (20) présente une deuxième rainure de guidage (90b) pour le guidage de l'ergot (44), ladite deuxième rainure de guidage (90b) étant réalisée de sorte qu'en cas de déplacement du piston (42) dans la partie de capsule centrale (20) un coulissement continu du piston (42) de l'extrémité arrière (26) de la partie de capsule centrale (20) vers l'extrémité avant (24) de la partie de capsule centrale (20) n'est possible sans rotation du piston (42) autour de son axe longitudinal (L4) que jusqu'à un deuxième point d'arrêt (100b), ledit deuxième point d'arrêt (100b) étant placé de telle manière que le piston (42) coulissé jusqu'au deuxième point d'arrêt (100b) n'entre pas en contact avec la deuxième membrane (62) lorsque la partie de capsule centrale (20) est insérée dans la partie de capsule avant (10) et que la deuxième membrane (62) est fixée dans la partie de capsule avant (10).

8. Système d'application de capsule à trois chambres (1) selon la revendication 7, où la deuxième rainure de guidage (90b) est en outre réalisée de sorte qu'à partir de l'emplacement du deuxième point d'arrêt (100b), un coulissement prolongé du piston (42) vers l'extrémité avant (24) de la partie de capsule centrale (20) n'est possible qu'après rotation du piston (42) ou rotation et coulissement combinés du piston (42) vers l'extrémité arrière (26) de la partie de capsule centrale (20).

9. Système d'application de capsule à trois chambres (1) selon la revendication 7 ou la revendication 8, où la surface intérieure (12) de la partie de capsule avant (10) présente une troisième rainure de guidage (90c) pour le guidage de l'ergot (44) ; et
où, préférentiellement, lorsque la partie de capsule centrale (20) est insérée par son extrémité avant (24) dans l'extrémité arrière (16) de la partie de capsule avant (10) jusqu'à l'emplacement (18) où la deuxième membrane (62) peut être fixée, la deuxième rainure de guidage (90b) de la partie de capsule centrale se raccorde par correspondance de forme à la troisième rainure de guidage (90c) de la partie de capsule avant (10).

10. Système d'application de capsule à trois chambres (1) selon l'une quelconque des revendications 1 à 9, où l'extrémité avant (14) de la partie de capsule avant (10) présente un orifice ou une sortie (19) pour le passage d'une substance liquide ou visqueuse par l'extrémité avant (14) de la partie de capsule avant (10),
où, préférentiellement, l'orifice ou la sortie (19) sont réalisés comme embout Luer mâle ou comme élément de buse pivotante.

11. Système d'application de capsule à trois chambres (1) selon l'une quelconque des revendications 1 à 10, où le piston (42) présente une broche (46) pour le perçage de la première membrane (52) et/ou de la deuxième membrane (62).

12. Système d'application de capsule à trois chambres (1) selon l'une quelconque des revendications précédentes, où :
- la partie de capsule centrale (20) est insérée par son extrémité avant (24) dans l'extrémité arrière (16) de la partie de capsule avant (10) jusqu'à l'emplacement (18) prévu pour la fixation de la deuxième membrane (62) ;
- la partie de capsule centrale (20) est insérée par son extrémité arrière (26) dans l'extrémité avant (34) de la partie de capsule arrière (30) jusqu'à l'emplacement (38) prévu pour la fixation de la première membrane (52) ;
- l'extrémité arrière (16) de la partie de capsule avant (10) est raccordée à extrémité avant (34) de la partie de capsule arrière (30) ;
- le piston (42) est inséré dans l'extrémité arrière (36) de la partie de capsule arrière (30) et l'extrémité du piston (42) faisant face à l'extrémité avant (34) de la partie de capsule arrière (30) se trouve entre le premier point d'arrêt (100a) et l'extrémité arrière (36) de la partie de capsule arrière (30).

13. Capsule à trois chambres (1000), constituée du système d'application de capsule à trois chambres (1) selon la revendication 12, où
- la première membrane (52) est fixée dans la partie de capsule arrière (30) ;
- la deuxième membrane (62) est fixée dans la partie de capsule avant (10) ;
et où en outre :
- une première substance médicalement active se trouve dans la zone entre le piston (42) et la première membrane (52) ;
- une deuxième substance médicalement active se trouve dans la zone entre la première membrane (52) et la deuxième membrane (62) ; et
- une troisième substance médicalement active se trouve dans la zone entre la deuxième membrane (62) et l'extrémité avant (14) sensiblement fermée de la partie de capsule avant (10).

14. Procédé de fabrication d'une capsule à trois chambres (1000) selon la revendication 13 avec le système d'application de capsule à trois chambres (1) selon l'une quelconque des revendications 1 à 2, comprenant les étapes suivantes :
i) insertion du piston (42) dans l'extrémité arrière (36) de la partie de capsule arrière (30), de sorte que l'extrémité du piston (42) faisant face à l'extrémité avant (34) de la partie de capsule arrière (30) se trouve entre le premier point d'arrêt (100a) et l'extrémité arrière (36) de la partie de capsule arrière (30) ;
j) remplissage de la partie de capsule arrière (30) avec une première substance médicalement active dans la zone entre le piston (42) et l'emplacement (38) prévu pour la fixation de la première membrane (52) ;
k) fixation de la première membrane (52) à l'emplacement (38) prévu à cet effet dans la partie de capsule arrière (30) ;
l) insertion de la partie de capsule centrale (20) par son extrémité arrière (26) dans l'extrémité avant (34) de la partie de capsule arrière (30) jusqu'à l'emplacement (38) de la première membrane (52) ;
m) remplissage de la partie de capsule centrale (20) avec une deuxième substance médicalement active ;
n) remplissage de la partie de capsule avant (10) avec une troisième substance médicalement active dans la zone entre l'extrémité avant (14) sensiblement fermée de la partie de capsule avant (10) et l'emplacement (18) prévu pour la fixation de la deuxième membrane (62) ;
o) fixation de la deuxième membrane (62) à l'emplacement (18) prévu à cet effet dans la partie de capsule avant (10) ;
p) insertion de la partie de capsule centrale (20) par son extrémité avant (26) dans l'extrémité arrière (16) de la partie de capsule avant (10) jusqu'à l'emplacement (18) de la deuxième membrane (62).

15. Procédé non thérapeutique de fabrication d'une substance de mélange médicalement active avec une capsule à trois chambres (1000) selon la revendication 13, comprenant les étapes suivantes :
F) coulissement du piston (42) dans la direction de l'extrémité avant (34) de la partie de capsule arrière (30) jusqu'au premier point d'arrêt (100a) ;
G) rotation du piston (42) autour de son axe longitudinal (L4) suivant un premier angle prédéfini ;
H) coulissement du piston (42) dans la direction de l'extrémité avant (24) de la partie de capsule centrale (20) jusqu'au deuxième point d'arrêt (100b) ;
I) rotation du piston (42) autour de son axe longitudinal (L4) suivant un deuxième angle prédéfini ;
J) coulissement du piston (42) dans la direction de l'extrémité avant (14) de la partie de capsule avant (10) jusqu'à l'extrémité avant (14) sensiblement fermée de la partie de capsule avant (10).
